(19) Europäisches Patentamt

European Patent Office

Office européen des brevets

(11) **EP 1 359 491 B1**

(12) **EUROPEAN PATENT SPECIFICATION**

(45) Date of publication and mention
of the grant of the patent:
**16.11.2005 Bulletin 2005/46**

(51) Int Cl.⁷: **G06F 1/00**, H04L 29/06
// H04L9/32

(21) Application number: **03008063.4**

(22) Date of filing: **14.04.2003**

(54) **Methods for remotely changing a communications password**

Verfahren zur ferngesteuerten Änderung eines Kommunikationspasswortes

Méthodes pour changer un mot de passe de communication à distance

(84) Designated Contracting States:
**AT BE BG CH CY CZ DE DK EE ES FI FR GB GR
HU IE IT LI LU MC NL PT RO SE SI SK TR**

(30) Priority: **30.04.2002 US 135043**

(43) Date of publication of application:
**05.11.2003 Bulletin 2003/45**

(73) Proprietor: **MICROSOFT CORPORATION**
**Redmond, Washington 98052 (US)**

(72) Inventors:
• **Ayyagari, Arun**
  **Seattle, Washington 98115 (US)**
• **Ganugapati, Krishna**
  **Redmond, Washington 98053 (US)**
• **Simon, Daniel R.,**
  **Redmond, Washington 98052 (US)**
• **Moore, Timothy M.**
  **Bellevue, Washington 98008 (US)**
• **Bahl, Pradeep**
  **Redmond, Washington 98053 (US)**

(74) Representative: **Grünecker, Kinkeldey,**
**Stockmair & Schwanhäusser Anwaltssozietät**
**Maximilianstrasse 58**
**80538 München (DE)**

(56) References cited:
**US-A- 5 719 941**

• **BERNARD ABOBA, DAN SIMON, TIM MOORE,
MICROSOFT: "Secure Remote Password (SRP)"
IEEE STANDARDS WORKING GROUPS ,
[Online] November 2001 (2001-11), XP002249354
Retrieved from the Internet:
<URL:http://grouper.ieee.org/groups/802/11
/Documents/DocumentHolder/1-524.zip>
[retrieved on 2003-07-28]**
• **PROCEEDINGS OF THE 1998 INTERNET
SOCIETY SYMPOSIUM ON NETWORK AND
DISTRIBUTED SYSTEMS SECURITY, [Online]
March 1998 (1998-03), XP002249355 San Diego,
CA Retrieved from the Internet:
<URL:ftp://srp.stanford.edu/pub/srp/srp.ps
> [retrieved on 2003-07-28]**
• **WU T: "The SRP Authentication and Key
Exchange System" ., [Online] September 2000
(2000-09), XP002230544 Retrieved from the
Internet:
<URL:http://www.ietf.org/rfc/rfc2945.txt>
[retrieved on 2003-02-06]**
• **M. SWIFT ET AL.: "Microsoft Windows 2000
Kerberos Change Password" NETWORK
WORKING GROUP, [Online] February 2002
(2002-02), XP002249431 Retrieved from the
Internet:
<URL:http://www.ietf.org/rfc/rfc3244.txt>
[retrieved on 2003-07-29]**

**Description**

The present invention is related generally to computer communications, and, more particularly, to providing password-based security to computer communications sessions.

Computer networks are growing larger and are carrying much more sensitive information. For security's sake, a computing device using a network often proves its identity ("authenticates itself') to other devices and only communicates sensitive information with other authenticated devices. However, the vast majority of authenticated communications are still vulnerable to security attacks. In one form of security attack, an attacker is erroneously authenticated, possibly by impersonating a legitimate device. Once authenticated, the attacker has access to information meant only for legitimately authenticated devices. In a second form of attack, the attacker is not authenticated, but eavesdrops on communications among authenticated devices in order to obtain security codes. With those security codes in hand, the eavesdropper can access sensitive information sent by the authenticated devices. These security attacks are especially worrisome to devices that communicate via wireless technologies because it is difficult or impossible to restrict physical access to their communications.

These two forms of security attacks are addressed by two major aspects of communications security. First, authentication techniques are becoming increasingly sophisticated to prevent their use by illegitimate attackers. A typical communications environment contains an authentication server that communicates with all computing devices (called "authentication clients") when they attempt to become authenticated. To become authenticated, an authentication client usually must prove its knowledge of some authentication credentials. In some cases, the authentication credentials include a secret communications password shared between the authentication client and the authentication server. In other cases, the authentication credentials may be based upon public/private key pairs and security certificates. In any case, only upon proving its knowledge of the authentication credentials is the authentication client authenticated to the authentication server. The authentication process is usually mutual, with the authentication server also proving its identity to the authentication client.

In a second aspect of communications security, information transmitted among authenticated computing devices is encrypted. In a typical encryption method, the information sender and the receiver first agree upon an information-encoding scheme. The encoding scheme is based upon secret security keys, often, but not always, shared between the sender and the receiver. The secret security keys may be based upon the same communications password used for authentication. The sender encrypts the information using the agreed-upon encoding scheme and then sends the encrypted information to the receiver. Upon reception, the receiver decrypts the information using the agreed-upon encoding scheme. Although the encrypted information may still be eavesdropped, the eavesdropper cannot obtain the original information without knowing the security keys.

However, authentication and encryption do not always provide sufficient protection. For example, encrypted information is still subject to a number of attacks, including statistical attacks. In a statistical attack, an eavesdropper analyzes a set of encrypted messages in order to tease out patterns that are associated with the security scheme agreed upon by the sender and the receiver. From the patterns, the eavesdropper may discover the security keys underlying the agreed-upon security scheme and use them to decrypt the encrypted information.

Because of the statistical nature of this method of attack, its accuracy improves with an increasing number of messages analyzed. Thus one approach to frustrate statistical attacks is to limit the amount of information sent using any one security scheme. To do this, the security keys underlying the agreed-upon security scheme may be changed frequently. The mutual authentication process changes the security keys used by the authentication client and by the authentication server. However, authentication does not alter the fact that the new security keys are still based upon an unchanged communications password. Over time, that password may be compromised, so it too should be frequently changed. This is not as straightforward as it may at first appear. In order to be useful, the new password (or information derived from it) needs to be available both to the authentication client and to the authentication server. Simply setting a new password on the authentication client and then sending it over a communications link to the authentication server is not very secure. "Out-of-band" methods (methods that do not use a computer communications link) of sending the new password, though reasonably secure, may be so burdensome, especially if the authentication server is located far from the authentication client, that they discourage frequent password changes.

What is needed is a non-burdensome way for an authentication client and an authentication server to implement a new communications password without explicitly transmitting the new password over a communications link.

Bernard Aboba, Dan Simon, Tim Moore, Microsoft: "Secure Remote Password (SRP)" IEEE Standards Working Groups, [Online] November 2001 (2001-11), XP002249354, discloses a concept of Secure Remote Password (SRP) for password-based authentication.

Proceedings of the 1998 Internet Society Symposium on Network and Distributed Systems Security, [Online] March 1998 (1998-03), XP002249355, discloses a Secure Remote Password Protocol presenting a new password authentication, and key exchange protocol suitable for authenticating users and exchanging keys over an untrusted network, combining techniques of zero-knowledge proofs with asymmetric key exchange protocols.

WU T: "The SRP Authentication and Key Exchange System" [Online] September 2000 (2000-09), XP002230544, specifies an Internet standards track protocol for the Internet community and in particular describes an implementation of the SRP authentication and key exchange protocol that employs the SHA hash function to generate session keys and authentication proofs.

M. SWIFT ET AL.: "Microsoft Windows 2000 Kerberos Change Password" Network Working Group, [Online], February 2002 (2002-02), XP002249431, specifies Microsoft Windows 2000 Kerberos Change Password and Set Password Protocols.

It is the object of the present invention to provide improved methods for implementing a new password in a computing environment with an authentication client and an authentication server, as well as corresponding computer-readable media containing instructions for performing corresponding methods for implementing a new password and for providing corresponding data structures.

This object is solved by the subject matter of the independent claims.

Preferred embodiments are defined by the subject matter of the dependent claims.

In view of the foregoing, the present invention provides a method for an authentication client, having been authenticated by an authentication server, to leverage the effects of that authentication to implement a new communications password. The authentication server requests that the authentication client implement a new password. The authentication client gets a new password from its user. From the new password and from information provided by the authentication server, the authentication client derives a "password verifier." The password verifier is then shared with the authentication server. During the process of implementing the new password, communications between the authentication client and the authentication server are secured using security keys derived from the previous password. The new password itself is never sent to the authentication server, and it is essentially impossible to derive the new password from the password verifier. For future re-authentications, the authentication server's knowledge of the password verifier and the authentication client's knowledge of the new password itself serve as authentication credentials.

The authentication client and the authentication server, in parallel, derive a new set of security keys from their knowledge of their respective authentication credentials. The new security keys are used for authentication and encryption until the process is repeated and a newer set of security keys is derived from a newer password. This process may be repeated as often as desired to limit the amount of data sent using any one particular set of security keys and thus to limit the effectiveness of any statistical attacker.

In another aspect of the present invention, the authentication server decides when the current communications password should be changed, its decision possibly based upon the passage of time or upon the amount of data sent using the current password.

While the appended claims set forth the features of the present invention with particularity, the invention, together with its objects and advantages, may be best understood from the following detailed description taken in conjunction with the accompanying drawings of which:

Figure 1 is a block diagram showing an exemplary communications environment with an authentication client, an authentication server, and an eavesdropper;

Figure 2 is schematic diagram generally illustrating an exemplary computing system that supports the present invention;

Figures 3a through 3c together form a dataflow diagram generally showing the information passed and the operations performed when an authentication client and an authentication server mutually authenticate each other and then implement a new communications password according to one embodiment of the present invention; and

Figure 4 is a data structure diagram showing possible messages used during the process of implementing a new communications password.

Turning to the drawings, wherein like reference numerals refer to like elements, the present invention is illustrated as being implemented in a suitable computing environment. The following description is based on embodiments of the invention and should not be taken as limiting the invention with regard to alternative embodiments that are not explicitly described herein.

In the description that follows, the present invention is described with reference to acts and symbolic representations of operations that are performed by one or more computing devices, unless indicated otherwise. As such, it will be understood that such acts and operations, which are at times referred to as being computer-executed, include the manipulation by the processing unit of the computing device of electrical signals representing data in a structured form. This manipulation transforms the data or maintains them at locations in the memory system of the computing device, which reconfigures or otherwise alters the operation of the device in a manner well understood by those skilled in the art. The data structures where data are maintained are physical locations of the memory that have particular properties defined by the format of the data. However, while the invention is being described in the foregoing context, it is not meant to be limiting as those of skill in the art will appreciate that various of the acts and operations described hereinafter may also be implemented in hardware.

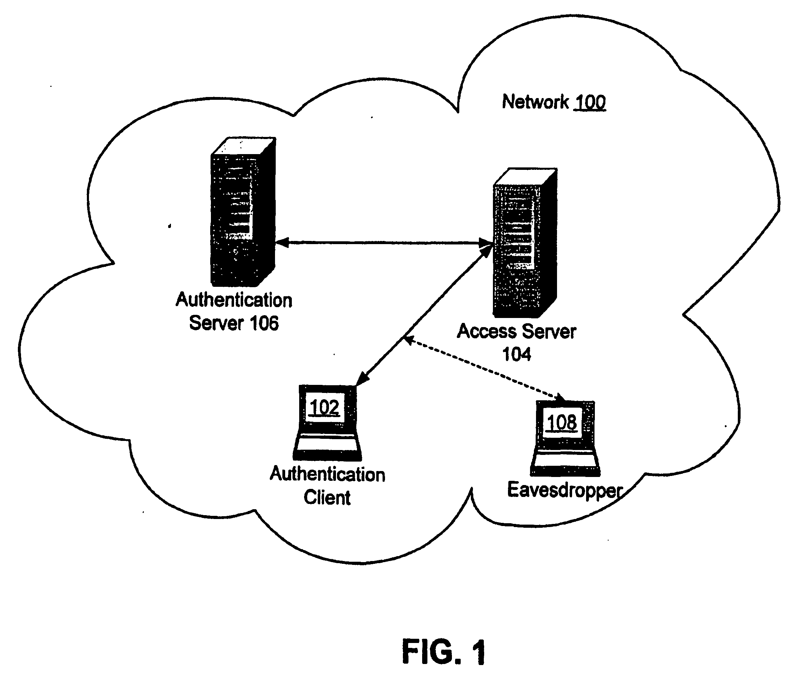

In the network environment 100 of Figure 1, an authentication client 102 has proven its identity ("authenticated itself") to an authentication server 106. To do this, the authentication client 102 proved to the authentication server 106 that it holds secret information presumably known only to the entity whose identity the authentication client 102 is claiming. This secret information is called the authentication client 102's "authentication credentials."

Note that in some environments 100, especially in wireless networks, the authentication client 102 may communicate directly with a local access server 104. The access server 104 passes communications between the authentication client 102 and the authentication server 106 which may be remote and may serve several, maybe hundreds, of networks 100. The possible presence of an access server 104 does not affect the discussion of the present invention and will not be mentioned again.

Upon completion of a successful authentication, the authentication client 102 and the authentication server 106 derive a set of security keys that they can use in encrypting and authenticating messages passed between them. The security keys are derived, in part, from the authentication client 102's authentication credentials. Encryption and authentication are necessary because all messages passed within the network 100 are subject to interception by a malicious eavesdropper 108. The eavesdropper 108 intercepts the messages and applies statistical methods to them in an attempt to discover the security keys used to protect them. Because of the statistical nature of this attack, its accuracy improves with an increasing number of messages analyzed. To frustrate this statistical attack, the authentication client 102 and authentication server 106 should quickly change the security keys before the eavesdropper 108 can intercept enough messages to discover those security keys.

Known methods exist for changing the security keys. For example, during each authentication, "liveness" information, such as a random value or a timestamp, is generated. By including the liveness information along with the authentication credentials in the derivation of the security keys, a different set of security keys is derived for each successful authentication. However, each set of security keys still derives from the same authentication credentials. If those credentials are compromised, then the security keys are vulnerable to attack. To prevent this, the authentication credentials should be changed periodically, just as the security keys derived from the authentication credentials are changed frequently.

Changing the authentication client 102's authentication credentials is not as straightforward as it may at first appear. The authentication credentials may be easily changed on the authentication client 102, but, in order to be useful, that change must be coordinated with the authentication server 106. Otherwise, the authentication server 106 would still seek proof of the authentication client 102's knowledge of the old authentication credentials. (As discussed below, the authentication server 106 need not actually know these authentication credentials. The authentication server 106 can verify the authentication client 102's knowledge of the authentication credentials without knowing those credentials itself.) One simple method of coordinating the change is to send the authentication credentials over a communications link to the authentication server 106. This method is, however, not very secure, given the possible presence of the eavesdropper 108. Other known methods of coordinating the change usually involve "out-of-band" communications (methods that do not use a computer communications link). While reasonably secure, out-of-band methods may be so burdensome, especially if the authentication server 106 is located far from the authentication client 102, that they discourage frequent changes to the authentication credentials. The present invention provides a secure but non-burdensome method for the authentication client 102 and the authentication server 106 to coordinate the implementation of new authentication credentials.

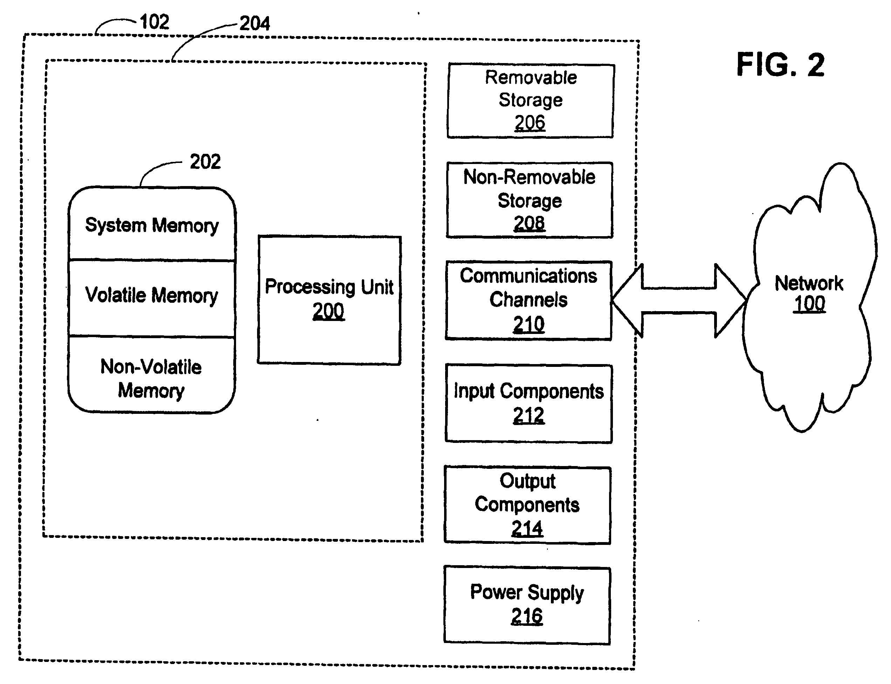

The authentication client 102 of Figure 1 may be of any architecture. Figure 2 is a block diagram generally illustrating an exemplary computer system that supports the present invention. The computer system of Figure 2 is only one example of a suitable environment and is not intended to suggest any limitation as to the scope of use or functionality of the invention. Neither should the authentication client 102 be interpreted as having any dependency or requirement relating to any one or combination of components illustrated in Figure 2. The invention is operational with numerous other general-purpose or special-purpose computing environments or configurations. Examples of well known computing systems, environments, and configurations suitable for use with the invention include, but are not limited to, personal computers, servers, hand-held or laptop devices, multiprocessor systems, microprocessor-based systems, set-top boxes, programmable consumer electronics, network PCs, minicomputers, mainframe computers, and distributed computing environments that include any of the above systems or devices. In its most basic configuration, the authentication client 102 typically includes at least one processing unit 200 and memory 202. The memory 202 may be volatile (such as RAM), non-volatile (such as ROM or flash memory), or some combination of the two. This most basic configuration is illustrated in Figure 2 by the dashed line 204. The authentication client 102 may have additional features and functionality. For example, the authentication client 102 may include additional storage (removable and non-removable) including, but not limited to, magnetic and optical disks and tape. Such additional storage is illustrated in Figure 2 by removable storage 206 and non-removable storage 208. Computer-storage media include volatile and nonvolatile, removable and non-removable, media implemented in any method or technology for storage of information such as computer-readable instructions, data structures, program modules, or other data. Memory 202, removable storage 206, and non-removable storage 208 are all examples of computer-storage media. Computer-storage media include, but are not limited to, RAM, ROM, EEPROM, flash memory, other memory technology, CD-ROM, digital versatile disks, other optical storage, magnetic cassettes, magnetic tape, magnetic disk storage, other magnetic storage devices, and any other media that can be used to store the desired information and that can be accessed by the authentication client 102. Any such computer-storage media may be part of the authentication client 102. The authentication client 102 may also contain communications channels 210 that allow the device to communicate with other devices. Communications channels 210 are examples of communications media. Communications media typically embody computer-readable instructions, data structures, program modules, or other data in a modulated data signal such as a carrier wave or other transport mechanism and include any information delivery media. The term "modulated data signal" means a signal that has one or more of its characteristics set or changed in such a manner as to encode information in the signal. By way of example, and not limitation, communications media include optical media, wired media, such as wired networks and direct-wired connections, and wireless media such as acoustic, RF, infrared, and other wireless media. The term "computer-readable media" as used herein includes both storage media and communications media. The authentication client 102 may also have input devices 212 such as a keyboard, mouse, pen, voice-input device, touch-input device, etc. Output devices 214 such as a display, speakers, and printer may also be included. All these devices are well know in the art and need not be discussed at length here.

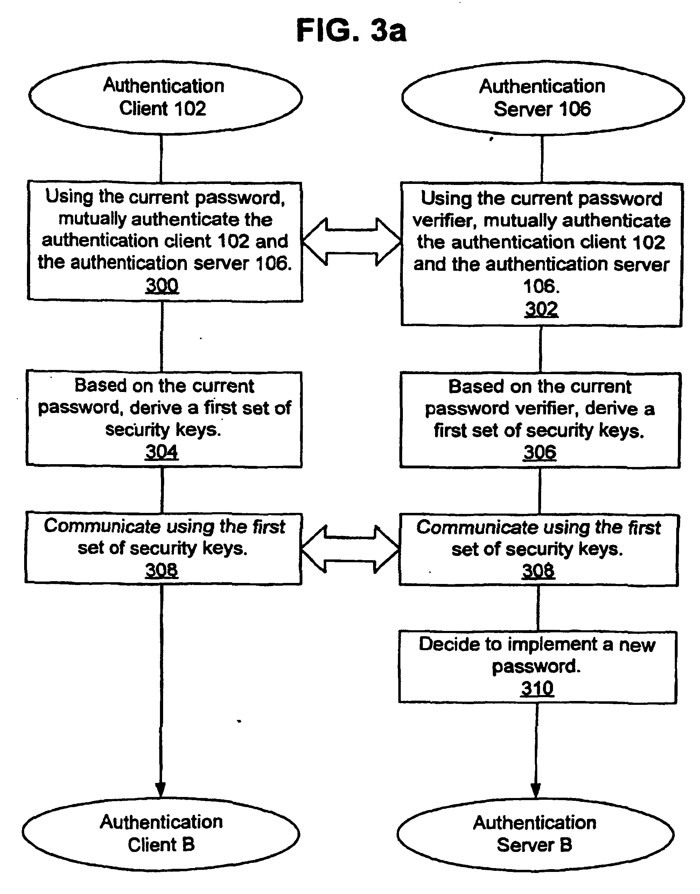

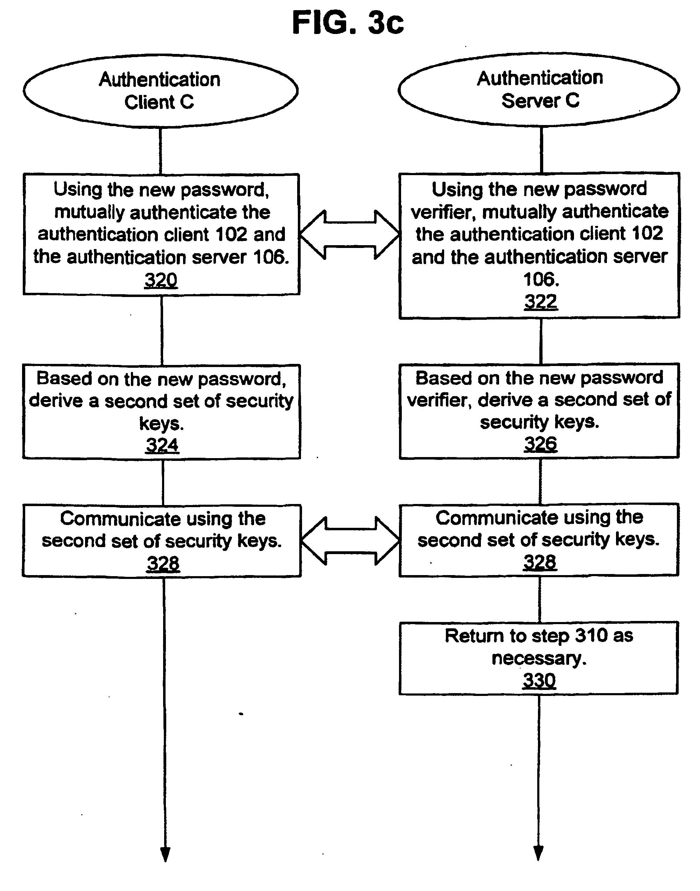

The dataflow diagram of Figures 3a through 3c illustrates an exemplary method for practicing the present invention. Steps 300 through 308 set the stage. In steps 300 and 302, the authentication client 102 and the authentication server 106 authenticate each other using known authentication techniques. As one example of a suitable authentication technique, consider IETF RFC (Internet Engineering Task Force Request for Comments) 2945, "The SRP Authentication and Key Exchange System," incorporated herein in its entirety. While steps 300 and 302 mention mutual authentication, the present discussion focuses on updating the authentication credentials used in one direction of authentication. In the examples to follow, the discussion focuses on authenticating the authentication client 102 to the authentication server 106. As the methods of the invention are equally applicable to authenticating the authentication server 106 to the authentication client 102, that direction of authentication need not be discussed further.

The authentication credentials used by the authentication client 102 in step 300 include a secret password. The value of that password is probably not stored on the authentication client 102, but is entered by a user of the authentication client 102 along with a username when the user wishes to be authenticated by the authentication server 106. For security's sake, the authentication server 106 does not know the value of the secret password. It does, however, know the value of a "password verifier" derived from the secret password. The authentication server 106 stores the password verifier in association with the username. (Because the password verifier is stored in association with the username rather than in association with an identifier of the authentication client 102, it would be more proper to say that the username is authenticated rather than that the authentication client 102 is authenticated. For example, if the user moves to a different client and uses the same username and password, the authentication methods will work as before. For ease of presentation, however, the present discussion will continue to talk about authenticating the authentication client 102 to the authentication server 106.)

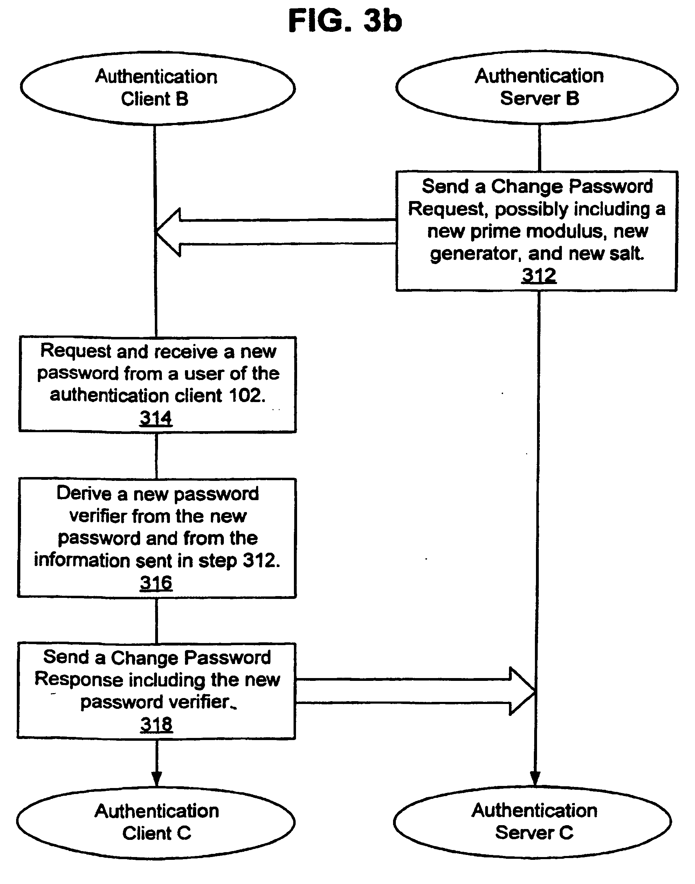

An example of how a password verifier may be derived from a password is discussed below in reference to step 316 of Figure 3b. At this point in the discussion, it is sufficient to know that the derivation is both "determinative" and "irreversible." Determinative means that there is no randomness in the derivation itself, that is, once the inputs to the derivation (which include the password but may include other values) are known, the output (the password verifier) is completely determined. That the derivation is irreversible means that the inputs cannot be determined by knowing the derivation's output. Stronger than that, if a party knows the password verifier and all of the inputs to the derivation except for the password, that party still cannot determine the password. These properties imply that, using the methods of the authentication process, only a party that knows the password itself can successfully claim to be the authentication client 102. During the authentication process, the authentication server 106 uses its knowledge of the password verifier to test the authentication client 102's knowledge of the password.

Other inputs to the derivation of the password verifier from the password are shared between the authentication client 102 and the authentication server 106. Because knowledge of these other values is insufficient to recreate the password verifier without knowledge of the password itself, these other values may be publicized before the authentication process begins and may even be set as parameters in a public-standard authentication protocol

As one result of the authentication process, the authentication client 102, in step 304, and the authentication server 106, in step 306, in parallel derive a set of security keys. The authentication client 102 derives the security keys from the secret password, and the authentication server 106 derives them from the password verifier. A successful authentication process ensures that the security keys derived on the two devices are the same. As an example both of how an authentication process can ensure this, and of how the security keys are derived, please see IETF RFC 2246, "The TLS Protocol".

The derivation of the security keys also involves liveness information shared between the authentication client 102 and the authentication server 106. The use of the shared liveness information in the derivation makes the security keys different every time the authentication client 102 authenticates itself to the authentication server 106. Were this not the case, the authentication client 102 would use the same security keys after every authentication. Knowing this, the eavesdropper 108 could resume its statistical attack every time the authentication client 102 is authenticated, adding newly intercepted messages to its analysis of messages intercepted during the authentication client 102's previous sessions.

The set of security keys usually includes both encryption keys (which may be either shared or may be a pair of one-way keys) and authentication keys. Once the keys are derived by the authentication client 102 and by the authentication server 106, these two devices can use the keys in step 308 to protect their communications. Examples of the use of the security keys are discussed below in reference to steps 312 and 318 of Figure 3b. Of course, as the authentication client 102 and the authentication server 106 begin in step 308 to communicate using the security keys, the eavesdropper 108 may also begin to intercept the communications and to subject them to statistical attack in an attempt to discover the security keys (not shown).

In step 310, the authentication server 106 decides to implement a new secret password. The reasons behind that decision may typically include the amount of time that the current password has been in use, the amount of information sent under the current password, and the inherent security of the network 100. Wireless networks are usually open to eavesdropping so passwords used on these networks should be periodically changed. In any case, upon deciding that the authentication client 102's password should change, the authentication server 106 sends a request to that effect in step 312. Note that "request" is probably a euphemism in this context: if the authentication client 102 does not respond by changing its password, the authentication client 106 will probably disable the current password, preventing the authentication client 102 from authenticating itself.

As discussed above in reference to the authentication process of steps 300 and 302, the process of deriving a new password verifier may take other inputs in addition to the new password itself. The authentication server 106 may choose to send new values for these other inputs along with the change password request. This is not strictly necessary as the new password verifier may be derived from the new password and from the same values of the other inputs used the last time the password was changed. However, security is enhanced by also changing at least some of these inputs. The specific exemplary inputs listed in step 312 (prime modulus, generator, and salt) are explained below in reference to step 316. For additional security, these values may be encrypting using the security keys derived in step 306. If the change password request includes any of these other inputs, then a MAC (Message Authentication Code) covering the new inputs may also be sent. A MAC is an irreversible hash of the inputs and is usable by the authentication client 102 to check whether the contents of the change password request have been received unaltered from the authentication server 106. An example of a method for producing a MAC may be found in IETF RFC 2104, "HMAC: Keyed-Hashing for Message Authentication".

The authentication client 102 receives the change password request along with the new input values, if any. If there are any new input values, then the MAC is verified. If the verification fails, then the change password request is ignored. Otherwise, the new values are decrypted using the same security key used to encrypt them, and the values are stored for later use. In step 314, the authentication client 314 prompts its user for a new password. For example, step 314 may take the form of the well known process wherein the user must enter the old password for authentication, then enter the new password twice for confirmation. In some embodiments, the new password may be checked against various criteria before being accepted. These criteria may include the familiar "must be at least eight characters long," "must include both letters and numerals," "must not be found in a standard dictionary," "must not be a permutation of a recently used password," "must not be the name of your spouse or pet," etc.

When the user creates a new password that passes whatever tests the authentication client 102 may impose, the authentication client 102 derives a new password verifier from the new password in step 316. As discussed above, the derivation should be both determinative and irreversible. IETF RFC 2945 presents the following method of derivation that fulfills both requirements:

$$\text{Password Verifier} = G \wedge SHA(salt \,|SHA(username \,|":"| \, password)) \% P$$

where:

SHA (Secure Hash Algorithm) is a hash function well known in the industry;
salt is a random value shared with the authentication server 106;
I is the string concatenation operator;
username and password are entered by a user of the authentication client 102;

":" is the string consisting of the colon character,

^ is the exponentiation operator;

% is the modulo (integer remainder) operator;

P is a "prime modulus," a large (for security's sake, at least 512-bit) prime number shared with the authentication server 106; and

G is a generator of P shared with the authentication server 106, that is, for any natural number A less than P, there exists another number B such that $G \wedge B \% P = A$.

If the authentication server 106 sent new values for the prime modulus, generator, or salt in step 312, then those new values are used in the derivation of the password verifier.

The authentication client 102 takes the new password verifier, encrypts it with the security keys derived in step 306, covers it with a MAC, and sends it to the authentication server 106 in step 318. After the password verifier is successfully sent, its presence on the authentication client 102 serves no further purpose so it may be discarded. The authentication server 106 verifies the MAC, decrypts the new password verifier with the same security key used to encrypt it, and stores the new password verifier in association with the username and with any of the other inputs to the derivation process that have changed. In some embodiments, the prime modulus and generator change rarely, if ever, but a new salt is created every time the password changes.

If after a period of time, the authentication server 106 does not receive a response to its change password request, it may send the request again. As noted above, after repeated unsuccessful attempts to change the password, the authentication server 106 may decide to disable the current password.

The process of coordinating the change in authentication credentials is complete. For security's sake, it is recommended that the authentication client 102 immediately use the new credentials by re-authenticating itself in step 320 to the authentication server 106. If the re-authentication is successful, then in steps 324 and 326, paralleling steps 304 and 306, the authentication client 102 and the authentication server 106, respectively, derive a new set of security keys based on the new authentication credentials. In step 328, the new security keys are used to protect communications. The new password and new password verifier remain in use as authentication credentials until the authentication server 106 returns to step 310 by deciding to change the password yet again.

Note that the methods of the present invention allow the authentication credentials to be changed without ever interrupting communications between the authentication client 102 and the authentication server 106. These two devices continue to use the old security keys until a new set of keys is derived based on the new authentication credentials.

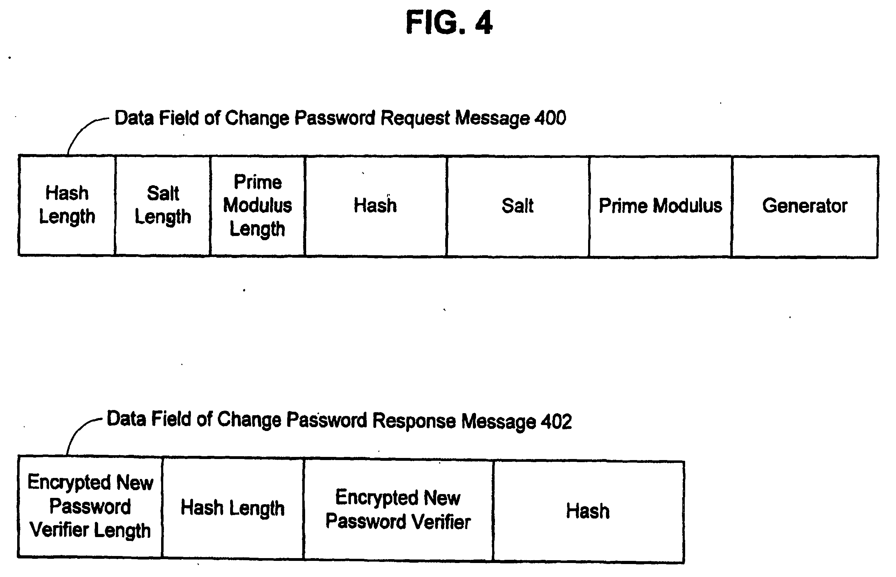

The communications protocols in use between the authentication client 102 and the authentication server 106 may determine the actual formats used to send information in steps 312 and 318. Figure 4 gives two exemplary data structures, item 400 for a change password request message and item 402 for a change password response message. Figure 4 only shows the data fields of the exemplary messages: the communications protocols used may add headers and trailers to these data fields. These two messages may be embodied, for example, as two new EAP-SRP (Extensible Authentication Protocol-Secure Remote Password) messages. EAP-SRP also defines a vendor-specific message that may be used to carry these data fields. Other communications protocols offer similar facilities.

In view of the many possible embodiments to which the principles of the present invention may be applied, it should be recognized that the embodiments described herein with respect to the drawing figures are meant to be illustrative only and should not be taken as limiting the scope of the invention. Those of skill in the art will recognize that some implementation details, such as data field sizes and message formats, are determined by the protocols chosen for specific situations and can be found in published standards. Although the invention is described in terms of software modules or components, some processes, especially encryption methods, may be equivalently performed by hardware components. Therefore, the invention as described herein contemplates all such embodiments as may come within the scope of the following claims and equivalents thereof.

**Claims**

1. A method in a computing environment with an authentication client (102) and an authentication server (106), the authentication client (102) having been authenticated to the authentication server, the authenticating of the authentication client (102) based on an old password known to the authentication client, on an old password verifier known to the authentication server, and on a username, old prime modulus, old generator of the old prime modulus, and old salt known to both the authentication client (102) and the authentication server, the method being for implementing a new password, the method comprising:

requesting (312), by the authentication server, that the authentication client change its password;

making accessible, by the authentication server to the authentication client, a new salt;

requesting and receiving (314), on the authentication client, a new password from a user of the authentication client;

computing (316), on the authentication client, a new password verifier, passing as inputs to the computing the new salt and the username;

making accessible (318), by the authentication client to the authentication server, the new password verifier, and

storing, on the authentication server, the username, new password verifier, and new salt.

2. The method of claim 1 wherein requesting that the authentication client (102) change its password comprises sending an EAP-SRP, Extensible Authentication Protocol-Secure Remote Password, Server Change Password message and wherein making accessible the new password verifier comprises sending an EAP-SRP Client Change Password message.

3. The method of claim 1 wherein requesting that the authentication client (102) change its password comprises sending an EAP-SRP Vendor-Specific Change Password Request message and wherein making accessible the new password verifier comprises sending an EAP-SRP Vendor-Specific Change Password Response message.

4. The method of claim 1 wherein the new salt is the same as the old salt and wherein making accessible the new salt comprises sharing, by the authentication server, the new salt with the authentication client (102) prior to requesting that the authentication client change its password.

5. The method of claim 1 wherein the new salt is not the same as the old salt and wherein making accessible the new salt comprises using, by the authentication server, a technique selected from the group consisting of: sending a message to the authentication client (102) containing the new salt; posting the new salt in a place accessible to the authentication server (106) and to the authentication client; and sharing the new salt with the authentication client (102) prior to requesting that the authentication client change its password.

6. The method of claim 5 wherein making accessible a new salt further comprises:

computing, by the authentication server, a first MAC covering the new salt, the first MAC based on an authentication-client-to-authentication-server authentication key derived during the authenticating of the authentication client;

making accessible, by the authentication server (106) to the authentication client, the first MAC; and

computing, on the authentication client (102), a second MAC covering the new salt, the second MAC based on the authentication-client-to-authentication-server authentication key;

and wherein requesting and receiving a new password and computing, making accessible, and storing a new password verifier are performed only if the first MAC matches the second MAC.

7. The method of claim 1 further comprising passing as further inputs to the computing the old prime modulus and the old generator of the old prime modulus.

8. The method of claim 7 wherein computing a new password verifier comprises, on the authentication client:

assigning to a first intermediate value the results of running a hash function, the inputs to the hash function comprising the username and the new password;

assigning to a second intermediate value the results of running a hash function, the inputs to the hash function comprising the new salt and the first intermediate value;

assigning to a third intermediate value the old generator raised to a power of the second intermediate value; and

assigning to the new password verifier the third intermediate value modulo the old prime modulus.

9. The method of claim 1 wherein making accessible the new password verifier comprises:

encrypting, on the authentication client (102), the new password verifier using an authentication-server-to-authentication-client encryption key derived during the authenticating of the authentication client;

making accessible, by the authentication client (102) to the authentication server, the encrypted new password verifier; and

decrypting, on the authentication server (106), the encrypted new password verifier using the authentication-server-to-authentication-client encryption key.

10. The method of claim 9 wherein making accessible the new password verifier further comprises:

computing, on the authentication client (102), a first MAC covering the encrypted new password verifier, the first MAC based on an authentication-server-to-authentication-client authentication key derived during the authenticating of the authentication client;

making accessible, by the authentication client (102) to the authentication server, the first MAC; and

computing, on the authentication server (106), a second MAC covering the encrypted new password verifier, the second MAC based on the authentication-server-to-authentication-client authentication key;

and wherein storing the usemame, new password verifier, and new salt is performed only if the first MAC matches the second MAC.

11. The method of claim 1 further comprising:

associating, on the authentication server (106), a timer with the requesting that the authentication client (102) change its password; and

if upon expiration of the timer no new password verifier is made accessible by the authentication client, then repeating, on the authentication server (106), the requesting that the authentication client (102) change its password.

12. The method of claim 1 further comprising:

authenticating the authentication client (102) to the authentication server (106) a second time, the second authenticating based on the new password known to the authentication client, on the new password verifier known to the authentication server, and on the username, old prime modulus, old generator of the old prime modulus, and new salt known to both the authentication client (102) and the authentication server (106).

13. The method of claim 1 further comprising:

making accessible, by the authentication server (106) to the authentication client (102), a new prime modulus and a new generator of the new prime modulus.

14. The method of claim 13 wherein making accessible a new salt, a new prime modulus, and a new generator of the new prime modulus comprises:

computing, on the authentication server (106), a first MAC covering the new salt, the new prime modulus, and the new generator, the first MAC based on an authentication-client-to-authentication-server authentication key derived during the authenticating of the authentication client (102);

making accessible, by the authentication server (106) to the authentication client (102), the first MAC; and

computing, on the authentication client (102), a second MAC covering the new salt, the new prime modulus, and the new generator, the second MAC based on the authentication-client-to-authentication-server authentication key;

and wherein requesting and receiving a new password and computing, making accessible, and storing a new password verifier are performed only if the first MAC matches the second MAC.

15. The method of claim 13 further comprising passing as further inputs to the computing the new prime modulus and the new generator.

16. The method of claim 15 wherein computing a new password verifier comprises, on the authentication client (102):

assigning to a first intermediate value the results of running a hash function, the inputs to the hash function comprising the username and the new password;

assigning to a second intermediate value the results of running a hash function, the inputs to the hash function comprising the new salt and the first intermediate value;

assigning to a third intermediate value the new generator raised to a power of the second intermediate value; and

assigning to the new password verifier the third intermediate value modulo the new prime modulus.

**17.** The method of claim 13 further comprising:

authenticating the authentication client (102) to the authentication server (106) a second time, the second authenticating based on the new password known to the authentication client (102), on the new password verifier known to the authentication server (106), and on the usemame, new prime modulus, new generator of the new prime modulus, and new salt known to both the authentication client (102) and the authentication server (106).

**18.** A computer-readable medium containing instructions for performing a method for implementing a new password, an authentication client (102) having been authenticated to an authentication server (106), the authenticating of the authentication client based on an old password known to the authentication client, on an old password verifier known to the authentication server, and on a username, old prime modulus, old generator of the old prime modulus, and old salt known to both the authentication client and the authentication server, the method comprising:

requesting, by the authentication server (16), that the authentication client (102) change its password;
making accessible, by the authentication server (106) to the authentication client (102), a new salt;
requesting and receiving, on the authentication client (102), a new password from a user of the authentication client (102);
computing, on the authentication client (102), a new password verifier, passing as inputs to the computing the new salt and the username;
making accessible, by the authentication client (102) to the authentication server (106), the new password verifier; and
storing, on the authentication server (106), the usemame, new password verifier, and new salt.

**19.** A method in a computing environment with an authentication client (102) and an authentication server (106), the authentication client (102) having been authenticated to the authentication server (106), the authenticating of the authentication client (102) based on an old password known to the authentication client, on an old password verifier known to the authentication server (106), and on a usemame, old prime modulus, old generator of the old prime modulus, and old salt known to both the authentication client (102) and the authentication server (106), the method being for the authentication server (106) to cause the authentication client (102) to implement a new password, the method comprising:

requesting that the authentication client (102) change its password;
making accessible to the authentication client (102) a new salt;
receiving from the authentication client (102) a new password verifier; and
storing the username, the new password verifier, and the new salt.

**20.** The method of claim 19 wherein requesting that the authentication client (102) change its password comprises sending an EAP-SRP Server Change Password message and wherein receiving from the authentication client (102) a new password verifier comprises receiving an EAP-SRP Client Change Password message.

**21.** The method of claim 19 wherein requesting that the authentication client (102) change its password comprises sending an EAP-SRP Vendor-Specific Change Password Request message and wherein receiving from the authentication client (102) a new password verifier comprises receiving an EAP-SRP Vendor- Specific Change Password Response message.

**22.** The method of claim 19 wherein the new salt is the same as the old salt and wherein making accessible to the authentication client (102) the new salt comprises sharing the new salt with the authentication client (102) prior to requesting that the authentication client (102) change its password.

**23.** The method of claim 19 wherein the new salt is not the same as the old salt and wherein making accessible to the authentication client (102) the new salt comprises using a technique selected from the group consisting of: sending a message to the authentication client (102) containing the new salt, posting the new salt in a place accessible to the authentication server (106) and to the authentication client, and sharing the new salt with the authentication client (102) prior to requesting that the authentication client change its password.

**24.** The method of claim 23 wherein making accessible to the authentication client (102) a new salt further comprises:

computing a Message Authentication Code (MAC) covering the new salt, the MAC based on an authentication-client-to-authentication-server authentication key derived during the authenticating of the authentication client (102); and

making accessible to the authentication client (102) the MAC.

**25.** The method of claim 19 wherein receiving from the authentication client (102) a new password verifier comprises:

receiving from the authentication client (102) an encrypted new password verifier; and

decrypting the encrypted new password verifier using an authentication-server-to-authentication-client encryption key derived during the authenticating of the authentication client (102).

**26.** The method of claim 25 wherein receiving from the authentication client (102) a new password verifier further comprises:

receiving from the authentication client (102) a MAC; and

computing a MAC covering the encrypted new password verifier, the MAC based on an authentication-server-to-authentication-client authentication key derived during the authenticating of the authentication client (102); and wherein storing the username, the new password verifier, and the new salt is performed only if the received MAC matches the computed MAC.

**27.** The method of claim 19 further comprising:

associating a timer with the requesting that the authentication client (102) change its password; and

if upon expiration of the timer no new password verifier is received from the authentication client (102), then repeating the requesting that the authentication client (102) change its password.

**28.** The method of claim 19 further comprising:

authenticating the authentication client (102) to the authentication server (106) a second time, the second authenticating based on the new password known to the authentication client (102), on the new password verifier known to the authentication server (106), and on the usemame, old prime modulus, old generator of the old prime modulus, and new salt known to both the authentication client (102) and the authentication server (106).

**29.** The method of claim 19 further comprising:

making accessible to the authentication client (102) a new prime modulus and a new generator of the new prime modulus.

**30.** The method of claim 29 wherein making accessible to the authentication client (102) a new salt, a new prime modulus, and a new generator of the new prime modulus comprises:

computing a MAC covering the new salt, the new prime modulus, and the new generator, the MAC based on an authentication-client-to-authentication-server authentication key derived during the authenticating of the authentication client (102); and

making accessible to the authentication client (102) the MAC.

**31.** The method of claim 29 further comprising:

authenticating the authentication client (102) to the authentication server (106) a second time, the second authenticating based on the new password known to the authentication client (102), on the new password verifier known to the authentication server (106), and on the usemame, new prime modulus, new generator of the new prime modulus, and new salt known to both the authentication client (102) and the authentication server (106).

**32.** A computer-readable medium containing instructions for performing a method for an authentication server (106) to cause an authentication client (102) to implement a new password, the authentication client (102) having been authenticated to the authentication server (106), the authenticating of the authentication client (102) based on an old password known to the authentication client (102), on an old password verifier known to the authentication server (106), and on a usemame, old prime modulus, old generator of the old prime modulus, and old salt known to both the authentication client (102) and the authentication server (106), the method comprising:

requesting that the authentication client (102) change its password;
making accessible to the authentication client (102) a new salt;
receiving from the authentication client (102) a new password verifier, and
storing the usemame, the new password verifier, and the new salt.

33. A method in a computing environment with an authentication client (102) and an authentication server, the authentication client (102) having been authenticated to the authentication server (106), the authenticating of the authentication client (102) based on an old password known to the authentication client (102), on an old password verifier known to the authentication server (106), and on a usemame, old prime modulus, old generator of the old prime modulus, and old salt known to both the authentication client (102) and the authentication server (106), the method being for the authentication client (102) to implement a new password, the method comprising:

receiving from the authentication server (106) a request that the authentication client change its password;
receiving from the authentication server (106) a new salt;
requesting and receiving a new password from a user of the authentication client (102);
computing a new password verifier, passing as inputs to the computing the new salt and the username; and
making accessible to the authentication server (106) the new password verifier.

34. The method of claim 33 wherein receiving a request that the authentication client (102) change its password comprises receiving an EAP-SRP Server Change Password message and wherein making accessible to the authentication server (106) the new password verifier comprises sending an EAP-SRP Client Change Password message.

35. The method of claim 33 wherein receiving a request that the authentication client (102) change its password comprises receiving an EAP-SRP Vendor-Specific Change Password Request message and wherein making accessible to the authentication server (106) the new password verifier comprises sending an EAP-SRP Vendor-Specific Change Password Response message.

36. The method of claim 33 wherein the new salt is the same as the old salt and wherein receiving from the authentication server (106) the new salt comprises sharing the new salt with the authentication server (106) prior to receiving the request that the authentication client (102) change its password.

37. The method of claim 33 wherein the new salt is not the same as the old salt and wherein receiving from the authentication server (106) the new salt comprises using a technique selected from the group consisting of: receiving a message from the authentication server (106) containing the new salt, accessing the new salt in a place accessible to the authentication server (106) and to the authentication client (102), and sharing the new salt with the authentication server (106) prior to receiving the request that the authentication client (102) change its password.

38. The method of claim 37 wherein receiving from the authentication server (106) a new salt further comprises:

receiving from the authentication server (106) a MAC; and
computing a MAC covering the new salt, the MAC based on an authentication-client-to-authentication-server authentication key derived during the authenticating of the authentication client (102);
and wherein computing and making accessible to the authentication server (106) the new password verifier are performed only if the received MAC matches the computed MAC.

39. The method of claim 33 further comprising passing as further inputs to the computing the old prime modulus and the old generator of the old prime modulus.

40. The method of claim 39 wherein computing a new password verifier comprises:

assigning to a first intermediate value the results of running a hash function, the inputs to the hash function comprising the username and the new password;
assigning to a second intermediate value the results of running a hash function, the inputs to the hash function comprising the new salt and the first intermediate value;
assigning to a third intermediate value the old generator raised to a power of the second intermediate value; and
assigning to the new password verifier the third intermediate value modulo the old prime modulus.

**41.** The method of claim 33 wherein making accessible to the authentication server (106) the new password verifier comprises:

encrypting the new password verifier using an authentication-server-to-authentication-client encryption key derived during the authenticating of the authentication client (102); and
making accessible to the authentication server (106) the encrypted new password verifier.

**42.** The method of claim 41 wherein making accessible to the authentication server (106) the new password verifier further comprises:

computing a MAC covering the encrypted new password verifier, the MAC based on an authentication-server-to-authentication-client authentication key derived during the authenticating of the authentication client (102); and
making accessible to the authentication server (106) the MAC.

**43.** The method of claim 33 further comprising:

authenticating the authentication client (102) to the authentication server (106) a second time, the second authenticating based on the new password known to the authentication client (102), on the new password verifier known to the authentication server (106), and on the username, old prime modulus, old generator of the old prime modulus, and new salt known to both the authentication client (102) and the authentication server (106).

**44.** The method of claim 33 further comprising:

receiving from the authentication server (106) a new prime modulus and a new generator of the new prime modulus.

**45.** The method of claim 44 wherein receiving from the authentication server (106) a new salt, a new prime modulus, and a new generator of the new prime modulus comprises:

receiving from the authentication server (106) a MAC; and
computing a MAC covering the new salt, the new prime modulus, and the new generator, the MAC based on an authentication-client-to-authentication-server authentication key derived during the authenticating of the authentication client (102);
and wherein computing and making accessible to the authentication server (106) the new password verifier are performed only if the received MAC matches the computed MAC.

**46.** The method of claim 44 further comprising passing as further inputs to the computing the new prime modulus and the new generator.

**47.** The method of claim 46 wherein computing a new password verifier comprises:

assigning to a first intermediate value the results of running a hash function, the inputs to the hash function comprising the username and the new password;
assigning to a second intermediate value the results of running a hash function, the inputs to the hash function comprising the new salt and the first intermediate value;
assigning to a third intermediate value the new generator raised to a power of the second intermediate value; and
assigning to the new password verifier the third intermediate value modulo the new prime modulus.

**48.** The method of claim 44 further comprising:

authenticating the authentication client (102) to the authentication server (106) a second time, the second authenticating based on the new password known to the authentication client (102), on the new password verifier known to the authentication server (106), and on the usemame, new prime modulus, new generator of the new prime modulus, and new salt known to both the authentication client (102) and the authentication server (106).

49. A computer-readable medium containing instructions for performing a method for an authentication client (102) to implement a new password, the authentication client (102) having been authenticated to the authentication server (106), the authenticating of the authentication client(102) based on an old password known to the authentication client (102), on an old password verifier known to the authentication server (106), and on a username, old prime modulus, old generator of the old prime modulus, and old salt known to both the authentication client (102) and the authentication server (106), the method comprising:

receiving from the authentication server (106) a request that the authentication client (102) change its password;
receiving from the authentication server (106) a new salt;
requesting and receiving a new password from a user of the authentication client (102);
computing a new password verifier, passing as inputs to the computing the new salt and the username; and
making accessible to the authentication server (106) the new password verifier.

50. A computer-readable medium having stored thereon a change password request data structure (400) for use in the method of claim 1, the change password request data structure (400) comprising:

a first data field containing data representing a salt;
a second data field containing data representing a prime modulus;
a third data field containing data representing a generator of the prime modulus; **characterized by**
a fourth data field containing data representing a MAC covering the salt, the prime modulus, and the generator.

51. The computer-readable medium of claim 50 wherein the salt, prime modulus, generator, and MAC are formatted as portions of a message (400) selected from the group consisting of: an EAP-SRP Server Change Password message and an EAP-SRP Vendor-Specific Change Password Request message.

52. The computer-readable medium of claim 50, having further stored thereon a change password response data structure (402), the change password response data structure comprising:

a first data field containing data representing a password verifier, and
a second data field containing data representing a MAC covering the password verifier.

53. The computer-readable medium of claim 52 wherein the password verifier and the MAC are formatted as portions of a message (402) selected from the group consisting of: an EAP-SRP Client Change Password message and an EAP-SRP Vendor-Specific Change Password Response message.


**Patentansprüche**

1. Verfahren in einer Rechnerumgebung mit einem Authentifizierungs-Client (102) und einem Authentifizierungs-Server (106), wobei der Authentifizierungs-Client (102) gegenüber dem Authentifizierungs-Server authentifiziert wurde, wobei das Authentifizieren des Authentifizierungs-Clients (102) auf einem alten, dem Authentifizierungs-Client bekannten Passwort, auf einem alten, dem Authentifizierungs-Server bekannten Passwortnachweis und auf einem Benutzemamen, einem alten Primzahlenmodulus, einem alten Erzeuger des alten Primzahlenmodulus und einem alten, dem Authentifizierungs-Client (102) und dem Authentifizierungs-Server bekannten Salt basiert; wobei das Verfahren zum Implementieren eines neuen Passwortes ist und wobei das Verfahren umfasst:

Auffordern (312), durch den Authentifizierungs-Server, dass der Authentifizierungs-Client sein Passwort ändert;

Zugänglichmachen eines neuen Salt, durch den Authentifizierungs-Server für den Authentifizierungs-Client;

Anfordern und Empfangen (314), durch den Authentifizierungs-Client, eines neuen Passwortes von einem Benutzer des Authentifizierungs-Clients;

Berechnen (316) eines neuen Passwortnachweises, durch den Authentifizierungs-Client, wobei dem Berechnen der neue Salt und der Benutzemame als Eingaben übergeben werden;

Zugänglichmachen (318), durch den Authentifizierungs-Client für den Authentifizierungs-Server, des neuen Passwortnachweises; und

Speichern, durch den Authentifizierungs-Server, des Benutzernamens, des neuen Passwortnachweises und des neuen Salt.

2. Verfahren gemäß Anspruch 1, wobei das Auffordern, dass der Authentifizierungs-Client (102) sein Passwort ändert, das Empfangen einer EAP-SRP Server-Passwortänderungs-Nachricht (Extensible Authentication Protocol-Secure Remote Password Server Change Password message) umfasst und wobei das Zugänglichmachen des neuen Passwortnachweises das Senden einer EAP-SRP Client-Passwort-Änderungsnachricht umfasst.

3. Verfahren gemäß Anspruch 1, wobei das Auffordern, dass der Authentifizierungs-Client (102) sein Passwort ändert, das Senden einer EAP-SRP anbieterspezifischen Passwortanderungs-Nachricht (EAP-SRP Vendor-Specific Change Password Request message) umfasst, und wobei das Zugänglichmachen des neuen Passwortnachweises das Senden einer EAP-SRP anbieterspezifischen Passwortänderungs-Antwortnachricht (EAP-SRP Vendor-Specific Change Password Response message) umfasst.

4. Verfahren gemäß Anspruch 1, wobei der neue Salt derselbe wie der alte Salt ist, und wobei das Zugänglichmachen ein Mitteilen (sharing) durch den Authentifizierungs-Server des neuen Salt an den Authentifizierungs-Client (102) vor dem Auffordern, dass der Authentifizierungs-Client sein Passwort ändert, umfasst.

5. Verfahren gemäß Anspruch 1, wobei der neue Salt nicht derselbe wie der alte Salt ist, und wobei das Zugänglichmachen des neuen Salt das Benutzen eines Verfahrens durch den Authentifizierungs-Server umfasst, das aus der folgenden Gruppe ausgewählt wird: Senden einer Nachricht zu dem Authentifizierungs-Client (102), welche den neuen Salt enthält; Eintragen des neuen Salt an einer Stelle, die für den Authentifizierungs-Server (116) und für den Authentifizierungs-Client zugänglich ist; und Mitteilen des neuen Salt dem Authentifizierungs-Client (102) vor dem Auffordern, dass der Authentifizierungs-Client sein Passwort ändert.

6. Verfahren gemäß Anspruch 5, wobei das Zugänglichmachen eines neuen Salt des Weiteren umfasst:

Berechnen, durch den Authentifizierungs-Server, eines ersten MAC, welcher den neuen Salt umfasst, wobei der erste MAC auf einem Authentifizierungs-Client-zu-Authentifizierungs-Server-Authentifizierungsschlüssel basiert, der während der Authentifizierung des Authentifizierungs-Clients erlangt wurde;

Zugänglichmachen des ersten MAC durch den Authentifizierungs-Server (106) für den Authentifizierungs-Client;

Berechnen, durch den Authentifizierungs-Client (102), eines zweiten MAC, der den neuen Salt umfasst, wobei der zweite MAC auf dem Authentifizierungs-Client-zu-Authentifizierungs-Server-Authentifizierungsschlüssel basiert;

und wobei das Anfordern und Empfangen eines neuen Passworts und das Berechnen, Zugänglichmachen und Speichern eines neuen Passwortnachweises nur durchgeführt werden, wenn der erste MAC dem zweiten MAC entspricht.

7. Verfahren gemäß Anspruch 1, welches des Weiteren das Übergeben des alten Primzahlenmodulus und des alten Generators des alten Primzahlenmodulus als eine Eingabe für den Schritt des Berechnens umfasst.

8. Verfahren gemäß Anspruch 7, wobei das Berechnen eines neuen Passwortnachweises durch den Authentifizierungs-Client umfasst:

Zuweisen der Ergebnisse des Ausführens einer Hash-Funktion zu einem ersten Zwischenwert, wobei die Eingaben der Hash-Funktion den Benutzernamen und das neue Passwort umfasst;

Zuweisen der Ergebnisse des Ausführens einer Hash-Funktion zu einem zweiten Zwischenwert, wobei die Eingaben der Hash-Funktion den neuen Salt und den ersten Zwischenwert umfassen;

Zuweisen des potenzierten alten Generators zu einem dritten Zwischenwert, wobei das Potenzieren des alten Generators mit dem zweiten Zwischenwert als Exponenten ausgeführt wird;

Zuweisen des dritten Zwischenwertes modulo des alten Primzahlenmodulus zu dem neuen Passwortnachweis.

9. Verfahren gemäß Anspruch 1, wobei das Zugänglichmachen des neuen Passwortnachweises umfasst:

Verschlüsseln des neuen Passwortnachweises durch den Authentifizierungs-Client (102) unter Benutzung eines Authentifizierungs-Server-zu-Authentifizierungs-Client-Verschlüsselungsschlüssel, welcher während der Authentifizierung des Authentifizierungs-Client erlangt wurde;

Zugänglichmachen des verschlüsselten neuen Passwortnachweises durch den Authentifizierungs-Client (102) für den Authentifizierungs-Server;

Entschlüsseln des verschlüsselten neuen Passwortnachweises durch den Authentifizierungs-Server (106) unter Benutzung des Authentifizierungs-Server-zu-Authentifizierungs-Client-Verschlüsselungsschlüssel.

10. Verfahren gemäß Anspruch 9, wobei das Zugänglichmachen des neuen Passwortnachweises des Weiteren umfasst;
Berechnen eines ersten MAC durch den Authentifizierungs-Client (102), der den verschlüsselten neuen Passwortnachweis umfasst, wobei der erste MAC auf einem Authentifizierungs-Server-Zu-Authentifizierungs-Client-Authentifizierungsschlüssel basiert, welcher während der Authentifizierung des Authentifizierungs-Clients erlangt wurde;
Zugänglichmachen des ersten MAC durch den Authentifizierungs-Client (102) für den Authentifizierungs-Server,
Berechnen eines zweiten MAC durch den Authentifizierungs-Server (106), der den verschlüsselten neuen Passwortnachweis umfasst, wobei der zweite MAC auf dem Authentifizierungs-Server-Zu-Authentifizierungs-Client-Authentifizierungsschlüssel basiert;
und wobei das Speichern des Benutzernamens, des neuen Passwortnachweises und des neuen Salt nur ausgeführt wird, wenn der erste MAC dem zweiten MAC entspricht.

11. Verfahren gemäß Anspruch 1, welches des Weiteren umfasst:

Zuordnen, durch den Authentifizierungs-Server (106), eines Timers zu dem Auffordern, dass der Authentifizierungs-Client (102) sein Passwort ändert;

wenn nach Ablauf des Timers kein neuer Passwortnachweis durch den Authentifizierungs-Client zugänglich gemacht wurde, wiederholen des Schrittes des Aufforderns, dass der Authentifizierungs-Client (102) sein Passwort ändert, durch den Authentifizierungs-Server (106).

12. Verfahren gemäß Anspruch 1, welches des Weiteren umfasst:

Authentifizieren des Authentifizierungs-Clients (102) gegenüber dem Authentifizierungs-Server (106) ein zweites Mal, wobei die zweite Authentifizierung auf dem neuen, dem Authentifizierungs-Client bekannten Passwort, dem neuen, dem Authentifizierungs-Server bekannten Passwortnachweis und dem Benutzernamen, dem alten Primzahlenmodulus, dem alten Generator des alten Primzahlenmodulus und dem neuen, dem Authentifizierungs-Client (102) und dem Authentifizierungs-Server (106) bekannten Salt basiert.

13. Verfahren gemäß Anspruch 1, welches des Weiteren umfasst:

Zugänglichmachen, durch den Authentifizierungs-Server (106) für den Authentifizierungs-Client (102), des neuen Primzahlenmodulus und eines neuen Generators des neuen Primzahlenmodulus.

14. Verfahren gemäß Anspruch 13, wobei das Zugänglichmachen eines neuen Salt, eines neuen Primzahlenmodulus und eines neuen Generators des neuen Primzahlenmodulus umfasst:

Berechnen eines ersten MAC durch den Authentifizierungs-Server (106), welcher den neuen Salt, den neuen Primzahlenmodulus und den neuen Generator umfasst, wobei der erste MAC auf einem Authentifizierungs-Client-Zu-Authentifizierungs-Server-Authentifizierungsschlüssel basiert, welcher während der Authentifizierung des Authentifizierungs-Clients (102) erlangt wurde;

Zugänglichmachen des ersten MAC durch den Authentifizierungs-Server (106) für den Authentifizierungs-Client (102);

Berechnen eines zweiten MAC durch den Authentifizierungs-Client (102), der den neuen Salt, den neuen Primzahlenmodulus und den neuen Generator umfasst, wobei der zweite MAC auf dem Authentifizierungs-Client-Zu-Authentifizierungs-Server-Authentifizierungsschlüssel basiert;

und wobei das Anfordern und Empfangen eines neuen Passwortes und das Berechnen, Zugänglichmachen und Speichern eines neuen Passwortnachweises nur durchgeführt wird, wenn der erste MAC dem zweiten MAC entspricht.

15. Verfahren gemäß Anspruch 13, welches des Weiteren das Übergeben des neuen Primzahlenmodulus und des neuen Generators als weitere Eingaben zu dem Schritt des Berechnens umfasst.

16. Verfahren gemäß Anspruch 15, wobei das Berechnen eines neuen Passwortnachweises durch den Authentifizierungs-Client (102) umfasst:

Zuweisen der Ergebnisse des Durchführens einer Hash-Funktion zu einem ersten Zwischenwert, wobei die Eingaben der Hash-Funktion den Benutzernamen und das neue Passwort umfassen;

Zuweisen der Ergebnisse des Durchführens einer Hash-Funktion zu einem zweiten Zwischenwert, wobei die Eingaben zu der Hash-Funktion den neuen Salt und den ersten Zwischenwert umfassen;

Zuweisen des potenzierten neuen Generators zu einem dritten Zwischenwert, wobei das Potenzieren des neuen Generators ein Potenzieren mit dem zweiten Zwischenwert als dem Exponenten durchgeführt wird;

Zuweisen des dritten Zwischenwertes modulo des neuen Primzahlenmodulus zu dem neuen Passwortnachweis.

17. Verfahren gemäß Anspruch 13, welches des Weiteren umfasst:

Authentifizieren des Authentifizierungs-Clients (102) gegenüber dem Authentifizierungs-Server (106) ein zweites Mal, wobei die zweite Authentifizierüng auf dem neuen, dem Authentifizierungs-Client (102) bekannten Passwort, dem neuen, dem Authentifizierungs-Server (106) bekannten Passwortnachweis, und dem Benutzernamen, dem neuen Primzahlenmodulus, dem neuen Generator für den neuen Primzahlenmodulus, und dem neuen, dem Authentifizierungs-Client (102) und dem Authentifizierungs-Server (106) bekannten Salt basiert.

18. Computerlesbares Medium, welches Instruktionen zum Ausführen eines Verfahrens zum Implementieren eines neuen Passwortes enthält, wobei ein Authentifizierungs-Client (102) gegenüber einem Authentifizierungs-Server (106) authentifiziert wurde, wobei das Authentifizieren des Authentifizierungs-Clients auf einem alten, dem Authentifizierungs-Client bekannten Passwort, auf einem alten, dem Authentifizierungs-Server bekannten Passwortnachweis und auf einem Benutzernamen, einem alten Primzahlenmodulus, einem alten Generator des alten Primzahlenmodulus und einem alten, dem Authentifizierungs-Client und dem Authentifizierungs-Server bekannten Salt basiert, wobei das Verfahren umfasst:

Auffordern, durch den Authentifizierungs-Server (16), dass der Authentifizierungs-Client (102) sein Passwort ändert;

Zugänglichmachen eines neuen Salt durch den Authentifizierungs-Server (106) für den Authentifizierungs-Client (102);

Anfordern und Empfangen, bei dem Authentifizierungs-Client (102), eines neuen Passwortes von einem Benutzer des Authentifizierungs-Clients (102);

Berechnen eines neuen Passwortnachweises durch den Authentifizierungs-Client (102), wobei als Eingaben für die Berechnung der neue Salt und der Benutzemame übergeben werden;

Zugänglichmachen des neuen Passwortnachweises durch den Authentifizierungs-Client (102) für den Authentifizierungs-Server (106);

Speichern, durch den Authentifizierungs-Server (106), des Benutzemamens, des neuen Passwortnachweises und des neuen Salt.

19. Verfahren in einer Rechnerumgebung mit einem Authentifizierungs-Clients (102) und einem Authentifizierungs-Server (106), wobei der Authentifizierungs-Client (102) gegenüber dem Authentifizierungs-Server (106) authentifiziert wurde, wobei das Authentifizieren des Authentifizierungs-Clients (106) auf einem alten, dem Authentifizierungs-Client bekannten Passwort, einem alten, dem Authentifizierungs-Server (106) bekannten Passwortnachweis und auf einem Benutzemamen, einem alten Primzahlenmodulus, einem alten Generator des alten Primzahlenmodulus und auf einem alten, dem Authentifizierungs-Client (102) und dem Authentifizierungs-Server (106) bekannten Salt basiert, wobei das Verfahren für den Authentifizierungs-Server (106) zum Veranlassen des Authentifizierungs-Clients (102) ein neues Passwort zu implementieren ist, und wobei das Verfahren umfasst:

Auffordern, dass der Authentifizierungs-Client (102) sein Passwort ändert;

Zugänglichmachen eines neuen Salt für den Authentifizierungs-Client (102);

Empfangen eines neuen Passwortnachweises von dem Authentifizierungs-Client (102); und

Speichern des Benutzernamens, des neuen Passwortnachweises und des neuen Salt.

20. Verfahren gemäß Anspruch 19, wobei das Auffordern, dass der Authentifizierungs-Client (102) sein Passwort ändert, das Empfangen einer EAP-SRP Server-Passwortwechsel-Nachricht umfasst und wobei das Empfangen eines neuen Passwortnachweises von dem Authentifizierungs-Client (102) das Empfangen einer EAP-SRP Client-Passwort-Änderungsnachricht umfasst.

21. Verfahren gemäß Anspruch 19, wobei das Auffordern, dass der Authentifizierungs-Client (102) sein Passwort ändert, das Senden einer EAP-SRP anbieterspezifische Passwortwechsel-Nachricht umfasst, und wobei das Empfangen eines neuen Passwortnachweises von dem Authentifizierungs-Client (102) das Empfangen einer EAP-SRP anbieterspezifischen Passwortwechsel-Antwortnachricht umfasst.

22. Verfahren gemäß Anspruch 19, wobei der neue Salt derselbe wie der alte Salt ist, und wobei das Zugänglichmachen für den Authentifizierungs-Client (102) ein Mitteilen (sharing) durch den Authentifizierungs-Server an den Authentifizierungs-Client (102) des neuen Salt vor dem Auffordern dass der Authentifizierungs-Client (102) sein Passwort ändert, umfasst.

23. Verfahren gemäß Anspruch 19, wobei der neue Salt nicht derselbe ist wie der alte Salt und wobei das Zugänglichmachen für den Authentifizierungs-Client (102) des neuen Salt das Benutzen eines Verfahrens umfasst, welches aus der folgenden Gruppe ausgewählt wird:

Senden einer Nachricht zu dem Authentifizierungs-Client (102), welche den neuen Salt enthält,

Eintragen des neuen Salt in eine Stelle, die für den Authentifzierungs-Server (106) und für den Authentifizierungs-Client zugänglich ist, und

Mitteilen des neuen Salt an den Authentifizierungs-Client (102) vor dem Auffordern, dass der Authentifizierungs-Client sein Passwort ändert.

24. Verfahren gemäß Anspruch 23, wobei das Zugänglichmachen eines neuen Salt für den Authentifizierungs-Client (102) des Weiteren umfasst:

Berechnen eines MAC (Message Authentication Code), welcher den neuen Salt umfasst, wobei der MAC auf einem Authentifizierungs-Client-Zu-Authentifizierungs-Server-Authentifizierungsschlüssel basiert, der während des Authentifizierens des Authentifizierungs-Clients (102) erlangt wurde; und Zugänglichmachen des MAC für den Authentifizierungs-Client (102).

25. Verfahren gemäß Anspruch 19, wobei das Empfangen eines neuen Passwortnachweises von dem Authentifizierungs-Client (102) umfasst:

Empfangen eines verschlüsselten neuen Passwortnachweises von dem Authentifizierungs-Client (102);

Entschlüsseln des verschlüsselten neuen Passwortnachweises unter Benutzung eines Authentifizierungs-Server-Zu-Authentifizierungs-Client-Verschlüsselungsschlüssels, der während des Authentifizierens des Authentifizierungs-Clients (102) erlangt wurde.

26. Verfahren gemäß Anspruch 25, wobei das Empfangen eines neuen Passwortnachweises von dem Authentifizierungs-Client (102) des weiteren umfasst:

Empfangen eines MAC von dem Authentifizierungs-Client (102); und

Berechnen eines MAC, der den verschlüsselten neuen Passwortnachweis umfasst, wobei der MAC auf einem Authentifizierungs-Server-Zu-Authentifizierungs-Client-Authentifizierungsschlüssel basiert, welcher während des Authentifizierens des Authentifizierungs-Clients (102) ermittelt wurde;

und wobei das Speichern des Benutzernamens, des neuen Passwortnachweises und des neuen Salt nur ausgeführt wird, wenn der empfangene MAC dem berechneten MAC entspricht.

27. Verfahren gemäß Anspruch 19, welches des Weiteren umfasst:

Zuordnen eines Timers zu der Aufforderung, dass der Authentifizierungs-Client (102) sein Passwort ändert; und

wenn nach Ablauf des Timers von dem Authentifizierungs-Client (102) kein neuer Passwortnachweis empfangen wurde, Wiederholen des Schrittes des Aufforderns, dass der Authentifizierungs-Client (102) sein Passwort ändert.

28. Verfahren gemäß Anspruch 19, welches des Weiteren umfasst:

Authentifizieren des Authentifizierungs-Clients (102) gegenüber dem Authentifizierungs-Server (106) ein zweites Mal, wobei die zweite Authentifizierung auf dem neuen, dem Authentifizierungs-Client (102) bekannten Passwort, dem neuen, dem Authentifizierungs-Server (106) bekannten Passwortnachweis, und dem Benutzemamen, dem alten Primzahlenmodulus, dem alten Generator für den alten Primzahlenmodulus und dem neuen, dem Authentifizierungs-Client (102) und dem Authentifizierungs-Server (106) bekannte Salt basiert.

29. Verfahren gemäß Anspruch 19, welches des Weiteren umfasst:

Zugänglichmachen eines neuen Primzahlenmodulus und eines neuen Generators des neuen Primzahlenmodulus für den Authentifizierungs-Client (102).

30. Verfahren gemäß Anspruch 29, wobei das Zugänglichmachen eines neuen Salt, eines neuen Primzahlenmodulus und eines neuen Generators des neuen Primzahlenmodulus für den Authentifizierungs-Client (102) umfasst:

Berechnen eines MAC, der den neuen Salt, den neuen Primzahlen-Modulus und den neuen Generator umfasst, wobei der MAC auf einem Authentifizierungs-Client-Zu-Authentifizierungs-Server-Authentifizierungsschlüssel basiert, der während des Authentifizierens des Authentifizierungs-Clients (102) erlangt wurde; und Zugänglichmachen des MAC über den Authentifizierungs-Client (102).

31. Verfahren gemäß Anspruch 29, welches des Weiteren umfasst:

Authentifizieren des Authentifizierungs-Clients (102) gegenüber dem Authentifizierungs-Server (106) ein zweites Mal, wobei die zweite Authentifizierung auf dem neuen, dem Authentifizierungs-Client (102) bekannte Passwort, dem neuen, dem Authentifizierungs-Server (106) bekannten Passwortnachweis, und auf dem Benutzemamen, dem neuen Primzahlenmodulus, dem neuen Generator des neuen Primzahlenmodulus und dem neuen, dem Authentifizierungs-Client und dem Authentifizierungs-Server (106) bekannten Salt basiert.

32. Computerlesbares Medium, welches Instruktionen zum Ausführen eines Verfahrens für einen Authentifizierungs-Server (106) zum Veranlassen eines Authentifizierungs-Clients (102) ein neues Passwort zu implementieren, umfasst, wobei der Authentifizierungs-Client (102) gegenüber dem Authentifizierungs-Server (106) authentifiziert wurde, wobei das Authentifizieren des Authentifizierungs-Clients (102) auf einem alten, dem Authentifizierungs-Client (102) bekannten Passwort, einem alten, dem Authentifizierungs-Server (106) bekannten Passwortnachweis, und einem Benutzemamen, einem alten Primzahlenmodulus, einem alten Generator des alten Primzahlenmodulus und einem alten, dem Authentifizierungs-Client (102) und dem Authentifizierungs-Server (106) bekannten Salt basiert, wobei das Verfahren umfasst:

Auffordern, dass der Authentifizierungs-Client (102) sein Passwort ändert;

Zugänglichmachen eines neuen Salt für den Authentifizierungs-Client (102);

Empfangen eines neuen Passwortnachweises von dem Authentifizierungs-Client (102), und

Speichern des Benutzemamens, des neuen Passwortnachweises und des neuen Salt.

33. Verfahren in einer Rechnerumgebung mit einem Authentifizierungs-Client (102) und einem Authentifizierungs-Server, wobei der Authentifizierungs-Client (102) gegenüber dem Authentifizierungs-Server (106) authentifiziert wurde, wobei das Authentifizieren des Authentifizierungs-Clients (102) auf einem alten, dem Authentifizierungs-Client (102) bekannten Passwort, einem alten, dem Authentifizierungs-Server (106) bekannten Passwortnachweis und einem Benutzemamen, einem alten Primzahlenmodulus, einem alten Generator des alten Primzahlenmodulus und einem alten, dem Authentifizierungs-Client (102) und dem Authentifizierungs-Server (106) bekannten Salt basiert, wobei das Verfahren für einen Authentifizierungs-Client (102) zum Implementieren eines neuen Passwortes ist, und wobei das Verfahren umfasst:

Empfangen einer Aufforderung von einem Authentifizierungs-Server (106), dass der Authentifizierungs-Client sein Passwort ändert;

Empfangen eines neuen Salt, von dem Authentifizierungs-Server (106);

Anfordern und Empfangen eines neuen Passwortes von einem Benutzer des Authentifizierungs-Client (102);

Berechnen eines neuen Passwortnachweises, wobei der neue Salt und der Benutzemame dem Schritt des Berechnens als Eingabe übergeben werden; und

Zugänglichmachen des neuen Passwortnachweises für den Authentifizierungs-Server (106).

34. Verfahren gemäß Anspruch 33, wobei das Empfangen einer Aufforderung, dass der Authentifizierungs-Client (102) sein Passwort ändert, das Empfangen einer EAP-SRP-Server-Passwortänderungsnachricht (EAP-SRP Server Change Password message) umfasst, und wobei das Zugänglichmachen des neuen Passwortnachweises für den Authentifizierungs-Server (106) das Senden einer EAP-SRP-Client-Passwortänderungsnachricht (EAP-SRP-Client Change Password message) umfasst.

35. Verfahren gemäß Anspruch 33, wobei das Empfangen einer Aufforderung, dass der Authentifizierungs-Client (102) das Passwort ändert, das Empfangen einer EAP-SRP anbieterspezifischen Passwortveränderungsaufforderungnachricht (EAP-SRP Vendor-Specific Change Password Request message) umfasst, und wobei das Zugänglichmachen des neuen Passwortnachweises für den Authentifizierungs-Server (106) das Senden einer EAP-SRP anbieterspezifischen Passwortänderungsantwortnachricht (EAP-SRP Vendor-Specific Change Password Response message) umfasst.

36. Verfahren gemäß Anspruch 33, wobei der neue Salt derselbe ist wie der alte Salt, und wobei das Empfangen des neuen Salt von dem Authentifizierungs-Server (106) das Mitteilen (sharing) des neuen Salt an den Authentifizierungs-Server (106) vor dem Empfangen der Aufforderung, dass der Authentifizierungs-Client (102) sein Passwort ändert, umfasst.

37. Verfahren gemäß Anspruch 33, wobei der neue Salt nicht derselbe ist wie der alte Salt, und wobei das Empfangen des neuen Salt von dem Authentifizierungs-Server (106) das Benutzen eines Verfahrens umfasst, welches aus der folgenden Gruppe ausgewählt ist: Empfangen einer Nachricht von dem Authentifizierungs-Server (106), welche den neuen Salt enthält, Zugreifen auf den neuen Salt in einer Stelle, die für den Authentifizierungs-Server (106) und den Authentifizierungs-Client (102) zugänglich ist, und Mitteilen des neuen Salt an den Authentifizierungs-Server (106) vor dem Empfangen der Aufforderung, dass der Authentifizierungs-Client (102) sein Passwort ändert.

38. Verfahren gemäß Anspruch 37, wobei das Empfangen eines neuen Salt von dem Authentifizierungs-Server (106) des Weiteren umfasst:

   Empfangen eines MAC von dem Authentifizierungs-Server (106); und

   Berechnen eines MAC, der den neuen Salt umfasst, wobei der MAC auf einemAuthentifizierungs-Client-zu-Authentifizierungs-Server-Authentifizierungsschlüssel basiert, der während der Authentifizierung des Authentifizierungs-Clients (102) hergeleitet wurde;

   und wobei das Berechnen und Zugänglichmachen für den Authentifizierungs-Server (106) eines neuen Passwortnachweises nur ausgeführt werden, wenn der empfangene MAC dem berechneten MAC entspricht.

39. Verfahren gemäß Anspruch 33, welches des Weiteren das Übergeben des alten Primzahlenmodulus und des alten Generators für den alten Primzahlenmodulus als Eingabe an den Schritt des Berechnens umfasst.

40. Verfahren gemäß Anspruch 39, wobei das Berechnen eines neuen Passwortnachweises umfasst:

   Zuweisen der Ergebnisse des Ausführens einer hash-Funktion zu einem ersten Zwischenwert, wobei die Eingaben der hash-Funktion den Benutzernamen und das neue Passwort umfassen;

   Zuweisen der Ergebnisse des Ausführens einer hash-Funktion zu einem zweiten Zwischenwert, wobei die Eingaben zu der hash-Funktion den neuen Salt und den ersten Zwischenwert umfassen;

   Zuweisen des potenzierten alten Generators zu einem dritten Zwischenwert, wobei das Potenzieren des Generators ein Potenzieren mit dem zweiten Zwischenwert als Exponenten ist;

   Zuweisen des dritten Zwischenwertes modulo des alten Primzahlenmodulus zu dem neuen Passwortnachweis.

41. Verfahren gemäß Anspruch 33, wobei das Zugänglichmachen des neuen Passwortnachweises für den Authentifizierungs-Server (106) umfasst:

   Verschlüsseln des neuen Passwortnachweises unter Benutzung eines Authentifizierungs-Server-Zu-Authentifizierungs-Client-Verschlüsselungsschlüssel, der während der Authentifizierung des Authentifizierungs-Clients (102) hergeleitet wurde; und
   Zugänglichmachen des verschlüsselten neuen Passwortnachweises für den Authentifizierungs-Server (106).

42. Verfahren gemäß Anspruch 41, wobei das Zugänglichmachen des neuen Passwortnachweises für den Authentifizierungs-Server (106) des Weiteren umfasst:

   Berechnen eines MAC, welcher den verschlüsselten neuen Passwortnachweis umfasst, wobei der MAC auf einem Authentifizierungs-Server-Zu-Authentifizierungs-Client-Verschlüsselungsschlüssel basiert, welcher während des Authentifizierens des Authentifizierungs-Clients (102) erlangt wurde;

   Zugänglichmachen des MAC zu dem Authentifizierungs-Server (106).

**43.** Verfahren gemäß Anspruch 33, welches des Weiteren umfasst:

Authentifizieren des Authentifizierungs-Clients (102) gegenüber dem Authentifizierungs-Server (106) eines zweites Mal, wobei die zweite Authentifizierung auf dem neuen, dem Authentifizierungs-Client (102) bekannten Passwort, dem neuen, dem Authentifizierungs-Server (106) bekannten Passwortnachweis, und dem Benutzernamen, dem alten Primzahlenmodulus, dem alten Generator für den alten Primzahlenmodulus und dem neuen, dem Authentifizierungs-Client (102) und dem Authentifizierungs-Server (106) bekannten Salt basiert.

**44.** Verfahren gemäß Anspruch 33, welches des Weiteren umfasst:

Empfangen eines neuen Primzahlenmodulus und eines neuen Generators für den neuen Primzahlenmodulus von dem Authentifizierungs-Server (106).

**45.** Verfahren gemäß Anspruch 44, wobei das Empfangen eines neuen Salt, eines neuen Primzahlenmodulus und eines neuen Generators für den neuen Primzahlenmodulus von dem Authentifizierungs-Server (106) umfasst:

Empfangen eines MAC von dem Authentifizierungs-Server (106); und

Berechnen eines MAC, der den neuen Salt, den neuen Primzahlenmodulus und den neuen Generator umfasst, wobei der MAC auf einem Authentifizierungs-Client-Zu-Authentifizierungs-Server-Authentifizierungsschlüssel basiert, welcher während des Authentifizierens des Authentifizierungs-Clients 102) ermittelt wurde;

und wobei das Berechnen und Zugänglichmachen des neuen Passwortnachweises für den Authentifizierungs-Server (106) nur ausgeführt werden, wenn der empfangene MAC dem berechneten MAC entspricht.

**46.** Verfahren gemäß Anspruch 44, welches des Weiteren das Übergeben des neuen Primzahlenmodulus und des neuen Generators als weitere Eingaben für die Berechnung umfasst.

**47.** Verfahren gemäß Anspruch 46, wobei das Berechnen eines neuen Passwortnachweises umfasst:

Zuweisen der Ergebnisse des Ausführens einer Hash-Funktion zu einem ersten Zwischenwert, wobei die Eingaben der Hash-Funktion den Benutzernamen und das neue Passwort umfassen;

Zuweisen der Ergebnisse des Ausführens einer Hash-Funktion zu einem zweiten Zwischenwert, wobei die Eingaben der Hash-Funktion den neuen Salt und den ersten Zwischenwert umfassen;

Zuweisen des potenzierten neuen Generators zu einem dritten Zwischenwert, wobei das Potenzieren des neuen Generators ein Potenzieren mit dem zweiten Zwischenwert als Exponenten ist; und

Zuweisen des dritten Zwischenwertes modulo des neuen Primzahlenmodulus zu dem neuen Passwortnachweis.

**48.** Verfahren gemäß Anspruch 44, welches des Weiteren umfasst:

Authentifizieren des Authentifizierungs-Clients (102) gegenüber dem Authentifizierungs-Server (106) ein zweites Mal, wobei die zweite Authentifizierung auf dem neuen, dem Authentifizierungs-Client (102) bekannten Passwort, dem neuen, dem Authentifizierungs-Server (106) bekannten Passwortnachweis, und dem Benutzernahmen, dem neuen Primzahlenmodulus, dem neuen Generator des neuen Primzahlenmodulus und dem neuen, dem Authentifizierungs-Client (102) und dem Authentifizierungs-Server (106) bekannten Salt basiert.

**49.** Computerlesbares Medium, welches Instruktionen zum Ausführen eines Verfahrens für einen Authentifizierungs-Client (102) zum Implementieren eines neuen Passworts enthält, wobei der Authentifizierungs-Client (102) gegenüber dem Authentifizierungs-Server (106) authentifiziert wurde, wobei das Authentifizieren des Authentifizierungs-Clients (102) auf einem alten, dem Authentifizierungs-Client (102) bekannten Passwort, einem alten, dem Authentifizierungs-Server (106) bekannten Passwortnachweis, und auf einem Benutzernamen, einem alten Primzahlenmodulus, einem alten Generator des alten Primzahlenmodulus und einem alten, dem Authentifizierungs-Client (102) und dem Authentifizierungs-Server (106) bekannten Salt basiert, wobei das Verfahren umfasst:

Empfangen einer Aufforderung von dem Authentifizierungs-Server (106), dass der Authentifizierungs-Client (102) sein Passwort ändert;

Empfangen eines neuen Salt von dem Authentifizierungs-Server (106);

Anfordern und Empfangen eines neuen Passworts von einem Benutzer des Authentifizierungs-Clients (102);

Berechnen eines neuen Passwortnachweises, wobei der neue Salt und der Benutzemahme als Eingaben für die Berechnung übergeben werden; und

Zugänglichmachen des neuen Passwortnachweises für den Authentifizierungs-Server (106).

50. Computerlesbares Medium, welches darauf eine Passwortänderungsanforderungsdatenstruktur (400) zur Benutzung in dem Verfahren von Anspruch 1 gespeichert hat, wobei die Passwortänderungsanforderungsdatenstruktur (400) umfasst:

ein erstes Datenfeld, welches Daten enthält, die einen Salt repräsentieren;

ein zweites Datenfeld, welches Daten enthält, die eine Primzahlenmodulus repräsentieren;

ein drittes Datenfeld, welches Daten enthält, die einen Generator des Primzahlenmodulus repräsentieren; **gekennzeichnet durch**
ein viertes Datenfeld, welches Daten enthält, die einen MAC repräsentieren, welcher den Salt, den Primzahlenmodulus und den Generator umfasst.

51. Computerlesbares Medium gemäß Anspruch 50, wobei der Salt, der Primzahlenmodulus, der Generator und MAC als Teile einer Nachricht (400) formatiert sind, welche aus der folgenden Gruppe ausgewählt sind:

eine EAP-SRP Serverpasswortänderungsnachricht und eine EAP-SRP anwenderspezifischer Passwortänderungsaufforderungsnachricht.

52. Computerlesbares Medium gemäß Anspruch 50, welches des Weiteren darauf eine Passwortänderungsantwortdatenstruktur (402) gespeichert hat, wobei die Passwortänderungsantwortdatenstruktur umfasst:

ein erstes Datenfeld, welches Daten enthält, die einen Passwortnachweis repräsentieren;

ein zweites Datenfeld, welches Daten enthält, die einen MAC repräsentieren, welcher den Passwortnachweis umfasst.

53. Computerlesbares Medium gemäß Anspruch 52, wobei der Passwortnachweis und der MAC als Teile einer Nachricht (402) formatiert sind, die aus der folgenden Gruppe ausgewählt sind:

EAP-SRP Client-Passwortänderungsnachricht (EAP-SRP Client Change Password message) und einer EAP-SRP anwenderspezifischer Passwortänderungsantwortnachricht (EAP-SRP Vendor-Specific Change Password Response message).

## Revendications

1. Procédé dans un environnement informatique avec un client d'authentification (102) et un serveur d'authentification (106), le client d'authentification (102) ayant été authentifié auprès du serveur d'authentification, l'authentification du client d'authentification (102) étant basée sur un ancien mot de passe connu du client d'authentification, sur un vérificateur d'ancien mot de passe connu du serveur d'authentification, et sur un nom d'utilisateur, un ancien module primaire, un ancien générateur de l'ancien module primaire, et une ancienne valeur de salage connus à la fois du client d'authentification (102) et du serveur d'authentification, le procédé étant destiné à mettre en oeuvre un nouveau mot de passe, le procédé consistant à:

demander (312), par le serveur d'authentification, que le client d'authentification change son mot de passe;

rendre accessible, par le serveur d'authentification au client d'authentification, une nouvelle valeur de salage;

demander et recevoir (314), au niveau du client d'authentification, un nouveau mot de passe en provenance d'un utilisateur du client d'authentification;

calculer (316), au niveau du client d'authentification, un vérificateur de nouveau mot de passe, en transmettant, en tant qu'entrées pour le calcul, la nouvelle valeur de salage et le nom d'utilisateur;

rendre accessible (318), par le client d'authentification au serveur d'authentification, le vérificateur de nouveau mot de passe; et

stocker, au niveau du serveur d'authentification, le nom d'utilisateur, le vérificateur de nouveau mot de passe et la nouvelle valeur de salage.

2. Procédé selon la revendication 1, dans lequel demander que le client d'authentification (102) change son mot de passe consiste à envoyer un message Changement de Mot de Passe Serveur EAP-SRP (Protocole d'Authentification Extensible - Mot de Passe Distant Sécurisé) et dans lequel rendre le vérificateur de nouveau mot de passe accessible consiste à envoyer un message Changement de Mot de Passe Client EAP-SRP.

3. Procédé selon la revendication 1, dans lequel demander que le client d'authentification (102) change son mot de passe consiste à envoyer un message Demande de Changement de Mot de Passe Spécifique au Vendeur EAP-SRP et dans lequel rendre le vérificateur de nouveau mot de passe accessible consiste à envoyer un message de Réponse Changement de Mot de Passe Spécifique au Vendeur EAP-SRP.

4. Procédé selon la revendication 1, dans lequel la nouvelle valeur de salage est identique à l'ancienne valeur de salage et dans lequel

rendre la nouvelle valeur de salage accessible consiste à partager, par le serveur d'authentification, la nouvelle valeur de salage avec le client d'authentification (102) avant de demander que le client d'authentification change son mot de passe.

5. Procédé selon la revendication 1, dans lequel la nouvelle valeur de salage n'est pas la même que l'ancienne valeur de salage et dans lequel rendre la nouvelle valeur de salage accessible consiste à utiliser, par le serveur d'authentification, une technique choisie dans le groupe de techniques consistant à: envoyer au client d'authentification (102) un message contenant la nouvelle valeur de salage; inscrire la nouvelle valeur de salage en un emplacement accessible au serveur d'authentification (106) et au client d'authentification; et partager la nouvelle valeur de salage avec le client d'authentification (102) avant de demander que le client d'authentification change son mot de passe.

6. Procédé selon la revendication 5, dans lequel rendre la nouvelle valeur de salage accessible consiste, en outre, à:

calculer, au niveau du serveur d'authentification, un premier code MAC (Code d'Authentification de Message) couvrant la nouvelle valeur de salage, le premier code MAC étant basé sur une clé d'authentification du client d'authentification auprès du serveur d'authentification obtenue au cours de l'authentification du client d'authentification;

rendre accessible, par le serveur d'authentification (106) au client d'authentification, le premier code MAC; et calculer, au niveau du client d'authentification (102), un second code MAC couvrant la nouvelle valeur de salage, le second code MAC étant basé sur la clé d'authentification du client d'authentification auprès du serveur d'authentification;

et dans lequel les étapes consistant à demander et recevoir un nouveau mot de passe et à calculer, rendre accessible et stocker un vérificateur de nouveau mot de passe ne sont exécutées que si le premier code MAC correspond au second code MAC.

7. Procédé selon la revendication 1, consistant, en outre, à transmettre en tant qu'autres entrées pour le calcul l'ancien module primaire et l'ancien générateur de l'ancien module primaire.

8. Procédé selon la revendication 7, dans lequel calculer un vérificateur de nouveau mot de passe consiste, au niveau du client d'authentification, à :

assigner à une première valeur intermédiaire les résultats de l'exécution d'une fonction de hachage, les entrées appliquées à la fonction de hachage comprenant le nom d'utilisateur et le nouveau mot de passe;

assigner à une seconde valeur intermédiaire les résultats de l'exécution d'une fonction de hachage, les entrées appliquées à la fonction de hachage comprenant la nouvelle valeur de salage et la première valeur intermédiaire;

assigner à une troisième valeur intermédiaire l'ancien générateur élevé à une puissance de la seconde valeur intermédiaire;'et

assigner au vérificateur du nouveau mot de passe la troisième valeur intermédiaire modulo l'ancien module primaire.

**9.** Procédé selon la revendication 1, dans lequel rendre accessible le vérificateur du nouveau mot de passe consiste à:

chiffrer, au niveau du client d'authentification (102), le vérificateur du nouveau mot de passe en utilisant une clé de chiffrement serveur d'authentification - client d'authentification obtenue pendant l'authentification du client d'authentification;

rendre accessible, au niveau du client d'authentification (102), le vérificateur de nouveau mot de passe chiffré; et

déchiffrer, au niveau du serveur d'authentification (106), le vérificateur de nouveau mot de passe chiffré en utilisant la clé de chiffrement serveur d'authentification - client d'authentification.

**10.** Procédé selon la revendication 9, dans lequel rendre accessible le vérificateur de nouveau mot de passe consiste, en outre, à:

calculer, au niveau du client d'authentification (102), un premier code MAC couvrant le vérificateur de nouveau mot de passe chiffré, le premier code MAC étant basé sur une clé d'authentification de serveur d'authentification auprès de client d'authentification obtenue pendant l'authentification du client d'authentification;

rendre accessible, par le client d'authentification (102) au serveur client d'authentification, le premier code MAC; et

calculer, au niveau du serveur d'authentification (106), un second code MAC couvrant le vérificateur de nouveau mot de passe chiffré, le second code MAC étant basé sur la clé d'authentification du client d'authentification auprès du serveur d'authentification;

et dans lequel l'étape consistant à stocker le nom d'utilisateur, le vérificateur de nouveau mot de passe et la nouvelle valeur de salage n'est exécutée que si le premier code MAC correspond au second code MAC.

**11.** Procédé selon la revendication 1, consistant, en outre, à:

associer, au niveau du serveur d'authentification (106), un temporisateur à la demande faite pour que le client d'authentification (102) change son mot de passe; et

si, à l'expiration du temps compté par le temporisateur, aucun vérificateur de nouveau de passe n'a été rendu accessible par le client d'authentification, à renouveler alors, au niveau du serveur d'authentification (106), la demande pour que le client d'authentification (102) change son mot de passe.

**12.** Procédé selon la revendication 1, consistant, en outre, à :

authentifier le client d'authentification (102) auprès du serveur d'authentification (106) une seconde fois, la seconde authentification étant basée sur le nouveau mot de passe connu du client d'authentification, sur le vérificateur de nouveau mot de passe connu du serveur d'authentification, et sur le nom d'utilisateur, l'ancien module primaire, l'ancien générateur de l'ancien module primaire et la nouvelle valeur de salage connus à la fois du client d'authentification (102) et du serveur d'authentification (106).

**13.** Procédé selon la revendication 1, consistant, en outre, à:

rendre accessible, par le serveur d'authentification (106) au client d'authentification (102), un nouveau module primaire et un nouveau générateur du nouveau module primaire.

**14.** Procédé selon la revendication 13, dans lequel rendre accessible une nouvelle valeur de salage, un nouveau module primaire et un nouveau générateur du nouveau module primaire consiste à:

calculer, au niveau du serveur d'authentification (106), un premier code MAC couvrant la nouvelle valeur de salage, le nouveau module primaire et le nouveau générateur, le premier code MAC étant basé sur une clé d'authentification de client d'authentification auprès de serveur d'authentification obtenue au cours de l'authentification du client d'authentification (102) ;

rendre accessible, par le serveur d'authentification (106) au client d'authentification (102), le premier code MAC; et

calculer, au niveau du client d'authentification (102), un second code MAC couvrant la nouvelle valeur de salage, le nouveau module primaire et le nouveau générateur, le second code MAC étant basé sur la clé d'authentification de client d'authentification auprès de serveur d'authentification;

et dans lequel les étapes consistant à demander et recevoir un nouveau mot de passe et à calculer, rendre accessible et stocker un vérificateur de nouveau mot de passe ne sont exécutées que si le premier code MAC correspond au second code MAC.

15. Procédé selon la revendication 13, consistant, en outre, à transmettre en tant qu'autres entrées pour le calcul le nouveau module primaire et le nouveau générateur.

16. Procédé selon la revendication 15, dans lequel le calcul d'un vérificateur de nouveau mot de passe consiste, au niveau du client d'authentification (102), à:

assigner à une première valeur intermédiaire les résultats de l'exécution d'une fonction de hachage, les entrées appliquées à la fonction de hachage comprenant le nom d'utilisateur et le nouveau mot de passe;

assigner à une seconde valeur intermédiaire les résultats de l'exécution d'une fonction de hachage, les entrées appliquées à la fonction de hachage comprenant la nouvelle valeur de salage et la première valeur intermédiaire;

assigner à une troisième valeur intermédiaire le nouveau générateur élevé à une puissance de la seconde valeur intermédiaire; et

assigner au vérificateur du nouveau mot de passe la troisième valeur intermédiaire modulo le nouveau module primaire.

17. Procédé selon la revendication 13, consistant, en outre, à:

authentifier le client d'authentification (102) auprès du serveur d'authentification (106) une seconde fois, la seconde authentification étant basée sur le nouveau mot de passe connu du client d'authentification (102), sur le vérificateur de nouveau mot de passe connu du serveur d'authentification (106), et sur le nom d'utilisateur, le nouveau module primaire, le nouveau générateur du nouveau module primaire et la nouvelle valeur de salage connus à la fois du client d'authentification (102) et du serveur d'authentification (106).

18. Support lisible par ordinateur contenant des instructions pour exécuter un procédé servant à mettre en oeuvre un nouveau mot de passe, un client d'authentification (102) ayant été authentifié auprès d'un serveur d'authentification (106), l'authentification du client d'authentification (102) étant basée sur un ancien mot de passe connu du client d'authentification, sur un vérificateur d'ancien mot de passe connu du serveur d'authentification, et sur un nom d'utilisateur, un ancien module primaire, un ancien générateur de l'ancien module primaire, et une ancienne valeur de salage connus à la fois du client d'authentification (102) et du serveur d'authentification, le procédé étant destiné à mettre en oeuvre un nouveau mot de passe, le procédé consistant à:

demander, par le serveur d'authentification (106), que le client d'authentification (102) change son mot de passe;

rendre accessible, par le serveur d'authentification (106) au client d'authentification (102), une nouvelle valeur de salage;

demander et recevoir, au niveau du client d'authentification (102), un nouveau mot de passe en provenance d'un utilisateur du client d'authentification (102);

calculer, au niveau du client d'authentification (102), un vérificateur de nouveau mot de passe, en transmettant, en tant qu'entrées pour le calcul, la nouvelle valeur de salage et le nom d'utilisateur;

rendre accessible, par le client d'authentification (102) au serveur d'authentification (106), le vérificateur de nouveau mot de passe; et

stocker, au niveau du serveur d'authentification (106), le nom d'utilisateur, le vérificateur de nouveau mot de passe et la nouvelle valeur de salage.

19. Procédé dans un environnement informatique avec un client d'authentification (102) et un serveur d'authentification (106), le client d'authentification (102) ayant été authentifié auprès du serveur d'authentification (106), l'authentification du client d'authentification (102) étant basée sur un ancien mot de passe connu du client d'authentification, sur un vérificateur d'ancien mot de passe connu du serveur d'authentification (106), et sur un nom d'utilisateur, un ancien module primaire, un ancien générateur de l'ancien module primaire, et une ancienne valeur de salage connus à la fois du client d'authentification (102) et du serveur d'authentification (106), le procédé étant destiné au serveur d'authentification (106) pour qu'il amène le client d'authentification (102) à mettre en oeuvre un nouveau mot de passe, le procédé consistant à:

demander que le client d'authentification (102) change son mot de passe;
rendre accessible au client d'authentification (102) une nouvelle valeur de salage;
recevoir du client d'authentification (102) un vérificateur de nouveau mot de passe; et
stocker le nom d'utilisateur, le vérificateur de nouveau mot de passe et la nouvelle valeur de salage.

**20.** Procédé selon la revendication 19, dans lequel demander que le client d'authentification (102) change son mot de passe consiste à envoyer un message Changement de Mot de Passe Serveur EAP-SRP (Protocole d'Authentification Extensible - Mot de Passe Distant Sécurisé) et dans lequel recevoir du client d'authentification (102) un vérificateur de nouveau mot de passe consiste à recevoir un message Changement de Mot de Passe Client EAP-SRP.

**21.** Procédé selon la revendication 19, dans lequel demander que le client d'authentification (102) change son mot de passe consiste à envoyer un message Demande de Changement de Mot de Passe Spécifique au Vendeur EAP-SRP et dans lequel recevoir du client d'authentification (102) un vérificateur de nouveau mot de passe consiste à recevoir un message de Réponse Changement de Mot de Passe Spécifique au Vendeur EAP-SRP.

**22.** Procédé selon la revendication 19, dans lequel la nouvelle valeur de salage est identique à l'ancienne valeur de salage et dans lequel rendre la nouvelle valeur de salage accessible au client d'authentification (102) consiste à partager la nouvelle valeur de salage avec le client d'authentification (102) avant de demander que le client d'authentification (102) change son mot de passe.

**23.** Procédé selon la revendication 19, dans lequel la nouvelle valeur de salage n'est pas la même que l'ancienne valeur de salage et dans lequel rendre la nouvelle valeur de salage accessible au client d'authentification (102) consiste à utiliser une technique choisie dans le groupe de techniques consistant à: envoyer au client d'authentification (102) un message contenant la nouvelle valeur de salage; inscrire la nouvelle valeur de salage en un emplacement accessible au serveur d'authentification (106) et au client d'authentification, et partager la nouvelle valeur de salage avec le client d'authentification (102) avant de demander que le client d'authentification change son mot de passe.

**24.** Procédé selon la revendication 23, dans lequel rendre une nouvelle valeur de salage accessible au client d'authentification (102) consiste, en outre, à:

calculer un code MAC (Code d'Authentification de Message) couvrant la nouvelle valeur de salage, le code MAC étant basé sur une clé d'authentification de client d'authentification auprès de serveur d'authentification obtenue au cours de l'authentification du client d'authentification (102); et
rendre accessible le code MAC au client d'authentification (102).

**25.** Procédé selon la revendication 19, dans lequel recevoir du client d'authentification (102) un vérificateur de nouveau mot de passe consiste à:

recevoir du client d'authentification (102) un vérificateur de nouveau mot de passe chiffré; et
déchiffrer le vérificateur de nouveau mot de passe chiffré en utilisant une clé de chiffrement serveur d'authentification - client d'authentification obtenue au cours de l'authentification du client d'authentification (102).

**26.** Procédé selon la revendication 25, dans lequel recevoir du client d'authentification (102) un vérificateur de nouveau mot de passe consiste, en outre, à:

recevoir du client d'authentification (102) un code MAC; et
calculer un code MAC couvrant le vérificateur de nouveau mot de passe chiffré, le code MAC étant basé sur une clé d'authentification de serveur d'authentification auprès de client d'authentification obtenue au cours de l'authentification du client d'authentification (102);
et dans lequel le stockage du nom d'utilisateur, du vérificateur de nouveau mot de passe et de la nouvelle valeur de salage n'est effectué que si le code MAC reçu correspond au code MAC calculé.

**27.** Procédé selon la revendication 19, consistant, en outre, à:

> associer un temporisateur à la demande faite pour que le client d'authentification (102) change son mot de passe; et
> si, à l'expiration du temps compté par le temporisateur, aucun vérificateur de nouveau de passe n'a été reçu du client d'authentification (102), à renouveler alors la demande faite pour que le client d'authentification (102) change son mot de passe.

**28.** Procédé selon la revendication 19, consistant, en outre, à :

> authentifier le client d'authentification (102) auprès du serveur d'authentification (106) une seconde fois, la seconde authentification étant basée sur le nouveau mot de passe connu du client d'authentification (102), sur le vérificateur de nouveau mot de passe connu du serveur d'authentification (106), et sur le nom d'utilisateur, l'ancien module primaire, l'ancien générateur de l'ancien module primaire et la nouvelle valeur de salage connus à la fois du client d'authentification (102) et du serveur d'authentification (106).

**29.** Procédé selon la revendication 19, consistant, en outre, à:

> rendre accessible au client d'authentification (102) un nouveau module primaire et un nouveau générateur du nouveau module primaire.

**30.** Procédé selon la revendication 29, dans lequel rendre accessible au client d'authentification (102) une nouvelle valeur de salage, un nouveau module primaire et un nouveau générateur du nouveau module primaire consiste à:

> calculer un code MAC couvrant la nouvelle valeur de salage, le nouveau module primaire et le nouveau générateur, le code MAC étant basé sur une clé d'authentification de client d'authentification auprès de serveur d'authentification obtenue au cours de l'authentification du client d'authentification (102) ; et
> rendre accessible le code MAC au client d'authentification (102).

**31.** Procédé selon la revendication 29, consistant, en outre, à:

> authentifier le client d'authentification (102) auprès du serveur d'authentification (106) une seconde fois, la seconde authentification étant basée sur le nouveau mot de passe connu du client d'authentification (102), sur le vérificateur de nouveau mot de passe connu du serveur d'authentification (106), et sur le nom d'utilisateur, le nouveau module primaire, le nouveau générateur du nouveau module primaire et la nouvelle valeur de salage connus à la fois du client d'authentification (102) et du serveur d'authentification (106).

**32.** Support lisible par ordinateur contenant des instructions pour exécuter un procédé destiné à un serveur d'authentification (106) pour qu'il amène un client d'authentification (102) à mettre en oeuvre un nouveau mot de passe, le client d'authentification (102) ayant été authentifié auprès du serveur d'authentification (106), l'authentification du client d'authentification (102) étant basée sur un ancien mot de passe connu du client d'authentification (102), sur un vérificateur d'ancien mot de passe connu du serveur d'authentification (106), et sur un nom d'utilisateur, un ancien module primaire, un ancien générateur de l'ancien module primaire, et une ancienne valeur de salage connus à la fois du client d'authentification (102) et du serveur d'authentification (106), le procédé consistant à :

> demander que le client d'authentification (102) change son mot de passe;
> rendre accessible au client d'authentification (102) une nouvelle valeur de salage;
> recevoir du client d'authentification (102) un vérificateur de nouveau mot de passe; et
> stocker le nom d'utilisateur, le vérificateur de nouveau mot de passe et la nouvelle valeur de salage.

**33.** Procédé dans un environnement informatique avec un client d'authentification (102) et un serveur d'authentification, le client d'authentification (102) ayant été authentifié auprès du serveur d'authentification (106), l'authentification du client d'authentification (102) étant basée sur un ancien mot de passe connu du client d'authentification (102), sur un vérificateur d'ancien mot de passe connu du serveur d'authentification (106), et sur un nom d'utilisateur, un ancien module primaire, un ancien générateur de l'ancien module primaire, et une ancienne valeur de salage connus à la fois du client d'authentification (102) et du serveur d'authentification (106), le procédé servant au client d'authentification (102) à mettre en oeuvre un nouveau mot de passe, le procédé consistant à:

recevoir du serveur d'authentification (106) une demande requérant que le client d'authentification change son mot de passe;

recevoir du serveur d'authentification (106) une nouvelle valeur de salage;

demander et recevoir un nouveau mot de passe en provenance d'un utilisateur du client d'authentification (102);

calculer un vérificateur de nouveau mot de passe, en transmettant, en tant qu'entrées pour le calcul, la nouvelle valeur de salage et le nom d'utilisateur; et

rendre accessible au serveur d'authentification (106) le vérificateur de nouveau mot de passe.

34. Procédé selon la revendication 33, dans lequel recevoir une demande requérant que le client d'authentification (102) change son mot de passe consiste à recevoir un message Changement de Mot de Passe Serveur EAP-SRP (Protocole d'Authentification Extensible - Mot de Passe Distant Sécurisé) et dans lequel rendre accessible au serveur d'authentification (106) le vérificateur de nouveau mot de passe consiste à envoyer un message Changement de Mot de Passe Client EAP-SRP.

35. Procédé selon la revendication 33, dans lequel recevoir une demande requérant que le client d'authentification (102) change son mot de passe consiste à recevoir un message Demande de Changement de Mot de Passe Spécifique au Vendeur EAP-SRP et dans lequel rendre accessible au serveur d'authentification (106) le vérificateur de nouveau mot de passe consiste à envoyer un message de Réponse Changement de Mot de Passe Spécifique au Vendeur EAP-SRP.

36. Procédé selon la revendication 33, dans lequel la nouvelle valeur de salage est identique à l'ancienne valeur de salage et dans lequel recevoir du serveur d'authentification (106) la nouvelle valeur de salage consiste à partager la nouvelle valeur de salage avec le serveur d'authentification (106) avant de recevoir la demande requérant que le client d'authentification (102) change son mot de passe.

37. Procédé selon la revendication 33, dans lequel la nouvelle valeur de salage n'est pas la même que l'ancienne valeur de salage et dans lequel recevoir du serveur d'authentification (106) la nouvelle valeur de salage consiste à utiliser une technique choisie dans le groupe de techniques consistant à: recevoir du serveur d'authentification (106) un message contenant la nouvelle valeur de salage, inscrire la nouvelle valeur de salage en un emplacement accessible au serveur d'authentification (106) et au client d'authentification (102), et partager la nouvelle valeur de salage avec le serveur d'authentification (106) avant de recevoir la demande requérant que le client d'authentification (102) change son mot de passe.

38. Procédé selon la revendication 37, dans lequel recevoir du serveur d'authentification (106) une nouvelle valeur de salage consiste, en outre, à:

recevoir du serveur d'authentification (106) un code MAC; et

calculer un code MAC couvrant la nouvelle valeur de salage, le code MAC étant basé sur une clé d'authentification de client d'authentification auprès de serveur d'authentification obtenue au cours de l'authentification du client d'authentification (102) ; et

dans lequel les étapes consistant à calculer et à rendre accessible au serveur d'authentification (106) le vérificateur de nouveau mot de passe ne sont exécutées que si le code MAC reçu correspond au code MAC calculé.

39. Procédé selon la revendication 33, consistant, en outre, à transmettre, en tant qu'autres entrées pour le calcul, l'ancien module primaire et l'ancien générateur de l'ancien module primaire.

40. Procédé selon la revendication 39, dans lequel calculer un vérificateur de nouveau mot de passe consiste à :

assigner à une première valeur intermédiaire les résultats de l'exécution d'une fonction de hachage, les entrées appliquées à la fonction de hachage comprenant le nom d'utilisateur et le nouveau mot de passe;

assigner à une seconde valeur intermédiaire les résultats de l'exécution d'une fonction de hachage, les entrées appliquées à la fonction de hachage comprenant la nouvelle valeur de salage et la première valeur intermédiaire;

assigner à une troisième valeur intermédiaire l'ancien générateur élevé à une puissance de la seconde valeur intermédiaire; et

assigner au vérificateur du nouveau mot de passe la troisième valeur intermédiaire modulo l'ancien module primaire.

**41.** Procédé selon la revendication 33, dans lequel rendre accessible au serveur d'authentification (106) le vérificateur du nouveau mot de passe consiste à:

chiffrer le vérificateur du nouveau mot de passe en utilisant une clé de chiffrement serveur d'authentification - client d'authentification obtenue pendant l'authentification du client d'authentification (102); et
rendre accessible au serveur d'authentification (106) le vérificateur de nouveau mot de passe chiffré.

**42.** Procédé selon la revendication 41, dans lequel rendre accessible au serveur d'authentification (106) le vérificateur du nouveau mot de passe consiste, en outre, à:

calculer un code MAC couvrant le vérificateur du nouveau mot de passe chiffré, le code MAC étant basé sur une clé d'authentification de serveur d'authentification auprès de client d'authentification obtenue pendant l'authentification du client d'authentification (102); et
rendre accessible au serveur d'authentification (106) le code MAC.

**43.** Procédé selon la revendication 33, consistant, en outre, à:

authentifier le client d'authentification (102) auprès du serveur d'authentification (106) une seconde fois, la seconde authentification étant basée sur le nouveau mot de passe connu du client d'authentification (102), sur le vérificateur de nouveau mot de passe connu du serveur d'authentification (106), et sur le nom d'utilisateur, l'ancien module primaire, l'ancien générateur de l'ancien module primaire et la nouvelle valeur de salage connus à la fois du client d'authentification (102) et du serveur d'authentification (106) .

**44.** Procédé selon la revendication 33, consistant, en outre, à:

recevoir du serveur d'authentification (106) un nouveau module primaire et un nouveau générateur du nouveau module primaire.

**45.** Procédé selon la revendication 44, dans lequel recevoir du serveur d'authentification (106) un nouvelle valeur de salage, un nouveau module primaire et un nouveau générateur du nouveau module primaire consiste à :

recevoir du serveur d'authentification (106) un code MAC; et
calculer un code MAC couvrant la nouvelle valeur de salage, le nouveau module primaire et le nouveau générateur, le code MAC étant basé sur une clé d'authentification de client d'authentification auprès de serveur d'authentification obtenue au cours de l'authentification du client d'authentification (102) ;
et dans lequel les étapes consistant à calculer et à rendre accessible au serveur d'authentification (106) le vérificateur de nouveau mot de passe ne sont exécutées que si le code MAC reçu correspond au code MAC calculé.

**46.** Procédé selon la revendication 44, consistant, en outre, à transmettre, en tant qu'autres entrées pour le calcul, le nouveau module primaire et le nouveau générateur.

**47.** Procédé selon la revendication 46, dans lequel calculer un vérificateur de nouveau mot de passe consiste à :

assigner à une première valeur intermédiaire les résultats de l'exécution d'une fonction de hachage, les entrées appliquées à la fonction de hachage comprenant le nom d'utilisateur et le nouveau mot de passe;
assigner à une seconde valeur intermédiaire les résultats de l'exécution d'une fonction de hachage, les entrées appliquées à la fonction de hachage comprenant la nouvelle valeur de salage et la première valeur intermédiaire;
assigner à une troisième valeur intermédiaire le nouveau générateur élevé à une puissance de la seconde valeur intermédiaire; et
assigner au vérificateur du nouveau mot de passe la troisième valeur intermédiaire modulo le nouveau module primaire.

**48.** Procédé selon la revendication 44, consistant, en outre, à:

authentifier le client d'authentification (102) auprès du serveur d'authentification (106) une seconde fois, la seconde authentification étant basée sur le nouveau mot de passe connu du client d'authentification (102), sur le vérificateur de nouveau mot de passe connu du serveur d'authentification (106), et sur le nom d'utilisateur, le nouveau module primaire, le nouveau générateur du nouveau module primaire et la nouvelle valeur de salage connus à la fois du client d'authentification (102) et du serveur d'authentification (106).

49. Support lisible par ordinateur contenant des instructions pour exécuter un procédé destiné à faire mettre en oeuvre un nouveau mot de passe par un client d'authentification (102), le client d'authentification (102) ayant été authentifié auprès du serveur d'authentification (106), l'authentification du client d'authentification (102) étant basée sur un ancien mot de passe connu du client d'authentification (102), sur un vérificateur d'ancien mot de passe connu du serveur d'authentification (106), et sur un nom d'utilisateur, un ancien module primaire, un ancien générateur de l'ancien module primaire, et une ancienne valeur de salage connus à la fois du client d'authentification (102) et du serveur d'authentification, le procédé consistant à:

recevoir du serveur d'authentification (106) une demande requérant que le client d'authentification (102) change son mot de passe;
recevoir du serveur d'authentification (106) une nouvelle valeur de salage;
demander et recevoir un nouveau mot de passe en provenance d'un utilisateur du client d'authentification (102);
calculer un vérificateur de nouveau mot de passe, en transmettant, en tant qu'entrées pour le calcul, la nouvelle valeur de salage et le nom d'utilisateur; et
rendre accessible au serveur d'authentification (106) le vérificateur de nouveau mot de passe.

50. Support lisible par ordinateur dans lequel est stockée une structure de données de demande de changement de mot de passe (400) destinée à être utilisée dans le procédé selon la revendication 1, la structure de données de demande de changement de mot de passe (400) comprenant:

un premier champ de données contenant des données représentant une valeur de salage;
un second champ de données contenant des données représentant un module primaire;
un troisième champ de données contenant des données représentant un générateur du module primaire;

**caractérisé par**
un quatrième champ de données contenant des données représentant un code MAC couvrant la valeur de salage, le module primaire et le générateur.

51. Support lisible par ordinateur selon la revendication 50, dans lequel la valeur de salage, le module primaire, le générateur et le code MAC sont formatés sous la forme de parties d'un message (400) choisies dans le groupe comprenant: un message de Changement de Mot de Passe Serveur EAP-SRP et un message de Demande de Changement de Mot de Passe spécifique au Vendeur.

52. Support lisible par ordinateur selon la revendication 50, dans lequel est en outre stockée une structure de données de réponse changement de mot de passe (402), la structure de données de réponse changement de mot de passe comprenant:

un premier champ de données contenant des données représentant un vérificateur de mot de passe; et
un second champ de données contenant des données représentant un code MAC couvrant le vérificateur de mot de passe.

53. Support lisible par ordinateur selon la revendication 52, dans lequel le vérificateur de mot de passe et le code MAC sont formatés sous la forme de parties d'un message (402) choisies dans le groupe comprenant: un message de Changement de Mot de Passe Client EAP-SRP et un message de Réponse Changement de Mot de Passe spécifique au Vendeur.

Network 100

Authentication
Server 106

Access Server
104

102
Authentication
Client

108
Eavesdropper

FIG. 1

EP 1 359 491 B1

**FIG. 2**

System Memory
202

Volatile Memory

Non-Volatile Memory

Processing Unit
200

Removable Storage
206

Non-Removable Storage
208

Communications Channels
210

Input Components
212

Output Components
214

Power Supply
216

Network
100

102

204

33

# FIG. 3a

Authentication
Client 102

Authentication
Server 106

Using the current password, mutually authenticate the authentication client 102 and the authentication server 106.
300

⟺

Using the current password verifier, mutually authenticate the authentication client 102 and the authentication server 106.
302

Based on the current password, derive a first set of security keys.
304

Based on the current password verifier, derive a first set of security keys.
306

Communicate using the first set of security keys.
308

⟺

Communicate using the first set of security keys.
308

Decide to implement a new password.
310

Authentication
Client B

Authentication
Server B

# FIG. 3b

Authentication
Client B

Authentication
Server B

Send a Change Password
Request, possibly including a
new prime modulus, new
generator, and new salt.
312

Request and receive a new
password from a user of the
authentication client 102.
314

Derive a new password
verifier from the new
password and from the
information sent in step 312.
316

Send a Change Password
Response including the new
password verifier.
318

Authentication
Client C

Authentication
Server C

# FIG. 3c

```
┌───────────────────┐                    ┌───────────────────┐
│   Authentication  │                    │   Authentication  │
│     Client C      │                    │     Server C      │
└───────────────────┘                    └───────────────────┘
```

| Authentication Client C | Authentication Server C |
|---|---|
| Using the new password, mutually authenticate the authentication client 102 and the authentication server 106. **320** | Using the new password verifier, mutually authenticate the authentication client 102 and the authentication server 106. **322** |
| Based on the new password, derive a second set of security keys. **324** | Based on the new password verifier, derive a second set of security keys. **326** |
| Communicate using the second set of security keys. **328** | Communicate using the second set of security keys. **328** |
| | Return to step 310 as necessary. **330** |

# FIG. 4

| Hash Length | Salt Length | Prime Modulus Length | Hash | Salt | Prime Modulus | Generator |
|---|---|---|---|---|---|---|
| | | | | | | |

| Encrypted New Password Verifier Length | Hash Length | Encrypted New Password Verifier | Hash |
|---|---|---|---|
| | | | |

EP 1 359 491 B1